(19) Europäisches Patentamt
European Patent Office
Office européen des brevets

(11) **EP 4 231 478 A1**

(12) **EUROPÄISCHE PATENTANMELDUNG**

(43) Veröffentlichungstag:
**23.08.2023 Patentblatt 2023/34**

(21) Anmeldenummer: **22157491.6**

(22) Anmeldetag: **18.02.2022**

(51) Internationale Patentklassifikation (IPC):
**H02J 3/06** (2006.01)    **H02J 13/00** (2006.01)

(52) Gemeinsame Patentklassifikation (CPC):
**H02J 13/00002; H02J 3/06;** H02J 2203/20

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Fröhner, Wiebke**
  **92224 Amberg (DE)**
• **Werner, Thomas**
  **91126 Rednitzhembach (DE)**

(74) Vertreter: **Siemens Patent Attorneys**
**Postfach 22 16 34**
**80506 München (DE)**

(54) **VERFAHREN, NETZSTEUEREINRICHTUNG UND SYSTEM ZUM STEUERN EINES ELEKTRISCHEN ORTSNETZES**

(57)    Die Erfindung betrifft ein Verfahren zum Steuern eines elektrischen Ortsnetzes (10), das an zumindest einem Einspeisepunkt (11a, 11b) mit einem übergeordneten Energieversorgungsnetz verbunden ist, wobei Spannungsmesswerte im Ortsnetz (10) mittels zumindest einer lokalen Mess- und Steuereinheit (17) und Strommesswerte im Bereich des Einspeisepunkts (11a, 11b) erfasst werden, die Messwerte an zumindest eine Netzsteuereinrichtung (16a, 16b) übermittelt werden und ein elektrischer Betriebszustand des Ortsnetzes (10) anhand zumindest eines Teils der Spannungs- bzw. Strommesswerte ermittelt wird.

Um eine einfache Möglichkeit zur Steuerung des Ortsnetzes anzugeben, die keinen hohen Installations- und Verwaltungsaufwand erfordert, wird vorgeschlagen, dass für den Fall, dass der Betriebszustand unzulässig und/oder ungewünscht ist, erste Maßnahmen zur Beeinflussung der Spannung im Ortsnetz (10) durch die zumindest eine Netzsteuereinrichtung (16a, 16b) während einer ersten Steuerphase ergriffen werden und zweite Maßnahmen zur Beeinflussung des Stroms am Einspeisepunkt (11a, 11b) durch die zumindest eine Netzsteuereinrichtung (16a, 16b) während einer zweiten Steuerphase ergriffen werden, die sich zeitlich an die erste Steuerphase anschließt.

Die Erfindung betrifft auch eine entsprechende Netzsteuereinrichtung sowie ein System mit einer solchen Netzsteuereinrichtung.

FIG 1

EP 4 231 478 A1

**Beschreibung**

Die Erfindung betrifft ein Verfahren zum Steuern eines elektrischen Ortsnetzes, wobei das Ortsnetz an zumindest einem Einspeisepunkt mit einem übergeordneten Energieversorgungsnetz verbunden ist und wobei bei dem Verfahren Spannungsmesswerte im Ortsnetz mittels zumindest einer lokalen Mess- und Steuereinheit und Strommesswerte im Bereich des Einspeisepunkts erfasst werden, die Spannungs- und Strommesswerte an zumindest eine Netzsteuereinrichtung übermittelt werden und ein elektrischer Betriebszustand des Ortsnetzes mittels der Netzsteuereinrichtung anhand zumindest eines Teils der Spannungs- bzw. Strommesswerte ermittelt wird.

Die Erfindung betrifft zudem auch eine Netzsteuereinrichtung zur Durchführung eines solchen Verfahrens und ein System mit einem Netzsteuereinrichtung.

Eine der wichtigsten Aufgaben von Betreibern von Energieversorgungssystemen ist die Sicherung und Verbesserung der Versorgungszuverlässigkeit. Energieversorgungssysteme werden dabei üblicherweise in mehrere Spannungsebenen unterteilt, beispielsweise in eine Hochspannungsebene (über ca. 30kV), über die eine Stromübertragung über weite Strecken stattfindet, eine Mittelspannungsebene (ca. 1 kV bis 30kV), zur Verteilung elektrischer Energie und zum Anschluss von Industriebetrieben, und eine Niederspannungsebene (unter 1kV) zur Verteilung der elektrischen Energie an den Endverbraucher. Dabei werden die Energieversorgungssysteme der verschiedenen Spannungsebenen nicht zwingend von demselben Betreiber betrieben.

Während üblicherweise auf der Hoch- und der Mittelspannungsebene liegende Energieversorgungsnetze mittels Automatisierungsanlagen überwacht, gesteuert und geschützt werden, findet man in Niederspannungsnetzen, die auch als Ortsnetze bezeichnet werden, bisher kein oder nur ein geringes Maß an Automatisierung vor. Der unidirektionale Energiefluss im Energieversorgungssystem vom zentralen Erzeuger zu den verteilten Verbrauchern hat bisher eine Automatisierung, z.B. ein Lastmanagement, in den für die Verteilung benötigten Niederspannungsnetzen im Allgemeinen nicht erfordert.

Die zunehmende Anzahl von dezentralen Erzeugungsanlagen, Speichern und Elektrofahrzeugen auf der Niederspannungsebene erfordert mittlerweile jedoch eine veränderte Betriebsführung der Ortsnetze.

Die steigende Verbreitung von neuen Energieanlagen wie Ladeeinrichtungen für Elektrofahrzeugen, Wärmepumpen oder Photovoltaikanlagen führt zu Schwierigkeiten bei der Einhaltung vorgegebener Normbereiche bzw. Grenzwerte von Spannungen und Strömen bzw. Leistungen in diesen Ortsnetzen, um einen sicheren und zuverlässigen Netzbetrieb zu ermöglichen. Ein Ausbau der Ortsnetze ist im Allgemeinen zu aufwendig oder praktisch schwer zu realisieren.

Zur Einhaltung der technischen Randbedingungen und zur Unterstützung der aktuellen und zukünftigen Geschäftsmodelle im Netzbetrieb und im Energiemarkt ist es daher erforderlich, auch in Ortsnetzen in gewissem Umfang steuernd eingreifen zu können.

Häufig empfiehlt es sich hierzu, die Überwachung und Steuerung bzw. Regelung der Anlagen in den Ortsnetzen mit Hilfe von dezentralen, intelligenten Systemen auszuführen, die sich im Bereich von Einspeisepunkten, an denen Ortsnetze mit übergeordneten Energieversorgungsnetzen verbunden sind, z.B. in sogenannten "Ortsnetzstationen", befinden. In diesem Zusammenhang ist beispielsweise aus der EP 3 107 174 B1 sowie der EP 3 336 995 B1 bekannt, in einer Ortsnetzstation eine Steuereinrichtung vorzusehen, die den elektrischen Zustand des Niederspannungsnetzes unter Verwendung weniger elektrischer Messwerte sowie exogener (d.h. äußerer) Zustandswerte, z.B. der Umgebungstemperatur, schätzt.

Grundsätzlich erfordern solche steuernden bzw. regelnden Eingriffe in den Netzbetrieb von elektrischen Energienetzen zunächst eine gute Kenntnis des aktuellen elektrischen Betriebszustandes des jeweiligen elektrischen Energienetzes, der beispielsweise durch im Netz vorliegende Spannungen und Ströme gekennzeichnet wird. Nur wenn der Betreiber den Betriebszustand seines elektrischen Energienetzes kennt, kann er regelnd oder steuernd auf die jeweiligen Ströme, Spannungen oder Leistungsflüsse einwirken. Da Ströme und Spannungen in einem elektrischen Energienetz üblicherweise nicht an jeder Position gemessen werden können, führt der Netzbetreiber oftmals eine Schätzung des elektrischen Betriebszustandes des Energienetzes durch. Diese wird mit sogenannten "Zustandsschätzern" (im Englischen auch als "State Estimator" bezeichnet) durchgeführt und liefert eine konsistente Beschreibung des Betriebszustandes an allen Stellen eines Energienetzes, die für weitere mathematische Berechnungen, z.B. für die Funktion der Spannungsblindleistungsoptimierung, genutzt werden kann.

Die Zustandsschätzung für elektrische Energienetze findet aktuell typischerweise in Netzleitstellen statt. Dazu werden Datenmodelle des Netzes und aktuelle Zustandsinformationen, wie z.B. vorhandene Messwerte und Schaltzustände, verwendet. Die angewandten Verfahren sind sehr aufwendig und erfordern im Allgemeinen ein genaues mathematisches Abbild (Netzmodell) des zu steuernden Energienetzes. Ein Zustandsschätzer und ein Verfahren zum Schätzen von Betriebszuständen von Energienetzen sind z.B. aus der EP 2 521 237 A1 bekannt.

Solche Lösungen sind für Ortsnetze in der Regel zu aufwendig bzw. teuer in der Installation und Wartung.

Zur Erkennung des aktuellen Netz-Betriebszustandes sehen bekannte Lösungen nämlich vor, dass spezielle Energieautomatisierungsgeräte elektrische Kenngrößen wir Strom und Spannung im Netz aufnehmen und an ein Rechnersystem übermitteln. Insbesondere die Installation und Inbetriebnahme solcher Energieautomatisierungsgeräte verursachen vergleichsweise hohe Kosten, die zu einem ungünstigen Kosten-Nutzenverhältnis der technischen Lösungen führen.

Die Ermittlung von Arbeitspunkten zur Steuerung der Ortsnetze auf Niederspannungsebene geschieht heute mit Netzberechnungsalgorithmen, die von Verfahren abgeleitet wurden, die in der Berechnung von Mittel- und Hochspannungsnetzen eingesetzt werden. Sie erfordern gute Datenmodelle der Ortsnetze. Deren ständige Pflege ist aufgrund sehr häufig vorkommender Änderungen, wie zum Beispiel durch den Zu- und Abbau von Energieanlagen oder Wartungsarbeiten in den Ortsnetzen, aufwendig.

Ein weiteres Problem stellt der Datenaustausch zwischen den beteiligten technischen Systemen dar. Im Falle von zentralen Rechnersystemen müssen diese in der Lage sein, mit einer großen Anzahl von Kommunikationsverbindungen zurechtzukommen. Bereits in den Mittelspannungs- und Ortsnetzen mittelgroßer Städte ist in naher Zukunft damit zu rechnen, dass einige Zehntausend Endkundenanlagen von einem zentralen IT-System überwacht und gesteuert werden müssten. Dies führt zu sehr komplexen IT-Systemen und einer sehr aufwendigen Administration des Datenaustauschs. Im Falle von dezentralen technischen Lösungen ist es hingegen schwierig, den Datenaustausch zwischen den dezentralen Rechnern und den Energieanlagen zu administrieren und die beteiligten technischen Systeme miteinander bekannt zu machen. Die dazu entwickelten Konzepte erfordern entweder die Nutzung spezieller Kommunikationsverfahren wie Power Line Communication (PLC) oder den Einsatz von selbstlernenden Verfahren zur Konfiguration, die jedoch längere Trainings- und Erkennungszeiten benötigen.

Ausgehend davon liegt der Erfindung die Aufgabe zugrunde, eine vergleichsweise einfache Möglichkeit zur Steuerung eines Ortsnetzes anzugeben, die insbesondere keinen hohen Installations- und Verwaltungsaufwand erfordert.

Zur Lösung dieser Aufgabe wird ein Verfahren der eingangs genannten Art erfindungsgemäß derart weitergebildet, dass für den Fall, dass der Betriebszustand unzulässig und/oder ungewünscht ist, durch die zumindest eine Netzsteuereinrichtung während einer ersten Steuerphase erste Maßnahmen zur Beeinflussung der Spannung im Ortsnetz und während einer zweiten Steuerphase, die sich zeitlich an die erste Steuerphase anschließt, zweite Maßnahmen zur Beeinflussung des Stroms am Einspeisepunkt ergriffen werden.

Ein besonderer Vorteil des erfindungsgemäßen Verfahrens besteht darin, dass es mit einfachen Regelschritten einen Betrieb des Ortsnetzes ermöglicht. Anstelle eines detaillierten und pflegeaufwendigen Datenmodells des Ortsnetzes und der darin verbauten energietechnischen Anlagen setzt das erfindungsgemäße Verfahren vielmehr auf einen heuristischen Regelansatz, bei dem von der zumindest einen Netzsteuereinrichtung sequentiell Maßnahmen zur Stabilisierung des elektrischen Betriebszustandes des Ortsnetzes durchgeführt werden. Dabei wird zuerst die Spannung im Ortsnetz in den erlaubten Bereich zurückgeführt (erste Steuerphase). In einem zweiten, daran anschließenden Schritt (zweite Steuerphase) wird bei Bedarf der sich einstellende Stromfluss am Einspeisepunkt beeinflusst. Sollte sich in der ersten Steuerphase bereits eine ausreichende Stabilisierung des Ortsnetzes eingestellt haben, können die Maßnahmen zur Strombeeinflussung entsprechend geringer ausfallen oder sogar gänzlich entfallen.

Im Vergleich zu einem aufwendigen System mit einer Leitstelle und spezialisierten Energieautomatisierungsgeräten werden bei dem erfindungsgemäßen Verfahren lediglich vergleichsweise einfache lokale Mess- und Steuereinheiten sowie mindestens eine Netzsteuereinrichtung benötigt. Die Netzsteuereinrichtung führt mit dem heuristischen Ansatz ein vergleichsweise einfaches Verfahren aus, so dass eine Einrichtung mittlerer Rechenleistung ausreichend sein dürfte. Schließlich werden bei dem Verfahren nur geringe Datenmengen übertragen, so dass auch an die Kommunikationsverbindung zwischen der Netzsteuereinrichtung und den lokalen Mess- und Steuereinheiten keine hohen Anforderungen gestellt werden müssen.

Gemäß einer vorteilhaften Ausführungsform des erfindungsgemäßen Verfahrens ist vorgesehen, dass die ersten und/oder die zweiten Maßnahmen das Ansteuern von hinsichtlich ihrer elektrischen Leistungsaufnahme und/oder elektrischen Leistungsabgabe regelbaren Komponenten im Ortsnetz umfassen.

Gemäß dieser Ausführungsform umfasst das Ortsnetz elektrische Komponenten, deren Leistungsaufnahme und/oder -abgabe regelbar ist. Bei solchen Komponenten kann es sich um energietechnische Anlagen wie z.B. Ladeeinrichtungen für Elektrofahrzeuge, Photovoltaikanlagen, Wärmepumpen, elektrische Speicher etc. handeln. Solche Komponenten werden häufig von Endverbrauchern in Ortsnetzen betrieben. Die Ansteuerung der regelbaren Komponenten kann einen Beitrag sowohl zur Stabilisierung der Spannung im Ortsnetz als auch zur Begrenzung eines Stromflusses über den Einspeisepunkt leisten. Beispielsweise kann eine erhöhte Einspeisung elektrischer Leistung am Anschlusspunkt einer Photovoltaikanlage die Spannung in diesem Bereich erhöhen und den Stromfluss über den Einspeisepunkt verringern. Entsprechend kann eine erhöhte Leistungsaufnahme einer Ladestation für ein Elektrofahrzeug während des Ladevorgangs zum Absenken einer Spannung beitragen.

In diesem Zusammenhang kann zudem konkret vorgesehen sein, dass die regelbaren Komponenten zur Steuerung ihrer elektrischen Leistungsaufnahme und/oder elektrischen Leistungsabgabe jeweils mit einer lokalen Mess- und Steuereinheit verbunden sind, wobei die jeweilige lokale Mess- und Steuereinheit von der zumindest einen Netzsteuereinrichtung Steuerbefehle empfängt und mittels eines Protokollumsetzers in Ansteuersignale für die regelbaren Komponenten umsetzt.

In diesem Fall übernimmt die lokale Mess- und Steuereinheit somit eine Doppelfunktion. Einerseits misst sie die Spannung an einer Anschlussstelle einer regelbaren Komponente und übermittelt entsprechende Spannungsmesswerte an die Netzsteuereinrichtung. Andererseits empfängt die jeweilige Mess- und Steuereinheit von der Netzsteuereinrichtung zur Umsetzung der ersten bzw. zweiten Maßnahmen geeignete Steuerbefehle und setzt diese in für die regelbare Komponente verständliche Ansteuersignale um. Damit stellt die lokale Mess- und Steuereinheit gleichsam eine Art Protokollgateway dar, das ein erstes Protokoll, nach dem die Steuerbefehle gebildet und übertragen werden, in ein zweites Protokoll zur Ansteuerung der regelbaren Komponenten umsetzt, wobei das erste und das zweite Protokoll vorzugsweise verschieden sind.

Eine weitere verteilhafte Ausführungsform des erfindungsgemäßen Verfahrens sieht vor, dass die ersten Maßnahmen das Ansteuern von aktiven Netzkomponenten, z.B. der Stufenstellung eines das Ortsnetz mit dem übergeordneten Energieversorgungsnetz verbindenden Transformators, von Längsspannungsreglern und/oder von regelbaren Batteriespeichern, umfassen.

Damit kann die Netzsteuereinrichtung zur Umsetzung der ersten Maßnahmen sogenannte aktive Netzkomponenten, wie z.B. stufbare Transformatoren, ansteuern. Solche aktiven Netzkomponenten sind dazu geeignet, die Spannung im Ortsnetz insgesamt zu beeinflussen. Beispielsweise kann durch Verstellung eines Stufenschalters eines stufbaren Transformators das Spannungsniveau im gesamten Ortsnetz um einen bestimmten Betrag angehoben oder abgesenkt werden.

In diesem Zusammenhang kann zudem konkret vorgesehen sein, dass die zumindest eine Netzsteuereinrichtung bei der Ermittlung der ersten Maßnahmen eine bei einer geplanten Änderung der Stufenstellung des Transformators erwartete Spannungsänderung berücksichtigt und eine Änderung der Stufenstellung nur dann durchführt, wenn die damit verbundene erwartete Spannungsänderung nicht zu einer Verschlechterung des Betriebszustands des Ortsnetzes führt.

Auf diese Weise wird vor einer Veränderung der Stufenstellung eines stufbaren Transformators geprüft, ob für die stufenweise anzuhebende oder abzusenkende Spannung im Ortsnetz eine ausreichende Reserve (Korrekturpotential) vorhanden ist. Konkret wird beispielsweise vor einer Absenkung der Spannung geprüft, ob die erwartete Spannungsänderung möglicherweise zur Verletzung eines unteren Spannungsgrenzwertes führen würde. In entsprechender Weise wird vor der Anhebung der Spannung sichergestellt, dass diese nicht zur Verletzung eines oberen Spannungsgrenzwertes führt. Sollte das aktuelle Spannungsniveau keine ausreichende Reserve zur gestuften Anhebung oder Absenkung der Spannung aufweisen, wird auf eine Ansteuerung des Stufenschalters verzichtet.

Gemäß einer weiteren vorteilhaften Ausführungsform des erfindungsgemäßen Verfahrens kann zudem vorgesehen sein, dass das Ortsnetz zumindest zwei Abgänge aufweist, die im Bereich des Einspeisepunktes aneinandergrenzen, wobei in jedem Abgang mindestens eine lokale Mess- und Steuereinheit vorgesehen ist, und die zumindest eine Netzsteuereinrichtung für zumindest einen Teil der lokalen Mess- und Steuereinheiten die ersten und die zweiten Maßnahmen ermittelt.

Üblicherweise weisen Ortsnetze nämlich eine Mehrzahl von Abgängen auf, die sich im Bereich des Einspeisepunktes, beispielsweise in einer Ortsnetzstation, treffen. Um die Spannung von jedem der Abgänge ermitteln zu können und damit für eine flächendeckende Stabilisierung des Ortsnetzes zu sorgen, muss in jedem der Abgänge mindestens eine lokale Mess- und Steuereinheit vorhanden sein. Die Netzsteuereinrichtung ermittelt in diesem Fall geeignete erste und zweite Maßnahmen und übermittelt diese an die lokalen Mess- und Steuereinheiten. Sofern mehr als eine Netzsteuereinrichtung vorgesehen ist, können sich die Netzsteuereinrichtungen die Ermittlung von ersten und zweiten Maßnahmen aufteilen und diese entsprechend nur an ihren jeweiligen Teil der lokalen Mess- und Steuereinheiten übermitteln.

In diesem Zusammenhang kann zudem konkret vorgesehen sein, dass bezüglich jeden Abgangs an mindestens zwei voneinander entfernten Stellen mit den lokalen Mess- und Steuereinheiten Spannungsmesswerte erfasst werden und die zumindest eine Netzsteuereinrichtung zur Ermittlung des Betriebszustands bezüglich jedes Abgangs jeweils den Maximalwert und/oder den Minimalwert der Spannung heranzieht.

Auf diese Weise kann auch bei einem Ortsnetz mit vielen Abgängen der Regelaufwand für die Netzsteuereinrichtung niedrig gehalten werden, da sie für jeden Abgang nur mit maximal zwei Spannungswerten, nämlich dem Maximalwert und/oder dem Minimalwert der jeweiligen abgangsbezogenen Spannung, arbeiten muss.

In diesem Zusammenhang kann ferner konkret vorgesehen sein, dass zur Ermittlung des Betriebszustands die zumindest eine Netzsteuereinrichtung die Lage des Minimalwertes bzw. Maximalwertes hinsichtlich eines erlaubten Spannungsbandes überprüft und in Abhängigkeit davon die ersten und/oder die zweiten Maßnahmen ergreift.

Üblicherweise ist in einem elektrischen Energiesystem nämlich ein Spannungsband mit einem oberen Grenzwert und einem unteren Grenzwert als erlaubter Bereich für die Spannung definiert. Eine Stabilisierung des Ortsnetzes durch die Netzsteuereinrichtung umfasst somit vorteilhafterweise Maßnahmen, die dazu geeignet sind, einer drohenden oder bereits erfolgten Verletzung des oberen oder unteren Grenzwertes des Spannungsbandes entgegenzuwirken.

Eine weitere vorteilhafte Ausführungsform des erfindungsgemäßen Verfahrens sieht vor, dass bei mehr als einer dem Ortsnetz zugeordneten Netzsteuereinrichtung die jeweilige Netzsteuereinrichtung nur die Messwerte von einer solchen lokalen Mess- und Steuereinheit verarbeitet, für die sie zuständig ist, wobei eine Prüfung auf Zuständigkeit die Stellung von Schaltern im Ortsnetz berücksichtigt.

Diese Ausführungsform berücksichtigt die Tatsache, dass auch mehr als eine Netzsteuereinrichtung vorgesehen sein kann. Dies kann in Fällen zutreffen, in denen ein Ortsnetz über mehr als einen Einspeisepunkt mit einem (oder mehreren) übergeordneten Energieversorgungsnetz verbunden ist. In einem solchen Fall kann bei jedem Einspeisepunkt eine Netzsteuereinrichtung vorgesehen sein, so dass eine klare Aufteilung der Zuständigkeiten seitens der Netzsteuereinrichtungen für die lokalen Mess- und Steuereinheiten vorgenommen werden muss. Üblicherweise wird in einem solchen Fall jeder Punkt eines Abgangs nur mit einem Einspeisepunkt elektrisch verbunden sein, jeweils andere Einspeisepunkte sind durch geöffnete Schalter davon abgetrennt. Zur Prüfung auf Zuständigkeit kann daher die Stellung von Schaltern im Ortsnetz herangezogen werden, denn nur eine Netzsteuereinrichtung, zwischen deren Einspeisepunkt und dem Anschlusspunkt der jeweiligen lokalen Mess- und Steuereinheit ein durchgehender (d.h., nicht von einem geöffneten Schalter unterbrochener) Strompfad besteht, kann für die fragliche lokale Mess- und Steuereinheit zuständig sein.

Eine weitere vorteilhafte Ausführungsform des erfindungsgemäßen Verfahrens sieht zudem vor, dass die zumindest eine Netzsteuereinrichtung regelmäßig überprüft, ob sie von einer jeweiligen lokalen Mess- und Steuereinheit Spannungsmesswerte erhält, und eine Fehlermeldung hinsichtlich einer solchen lokalen Mess- und Steuereinheit erzeugt, von der sie während einer vorgegebenen Zeitdauer keine Spannungsmesswerte erhalten hat.

Auf diese Weise können Fehler sowohl hinsichtlich der lokalen Mess- und Steuereinheit als auch hinsichtlich der Kommunikationsverbindung zur Netzsteuereinrichtung einfach erkannt werden. Sollten nämlich für eine vorgegebene Zeitdauer keine Spannungsmesswerte von einer bestimmten lokalen Mess- und Steuereinheit empfangen werden, so kann auf eine Fehlfunktion geschlossen werden. Eine diesbezüglich erzeugte Fehlermeldung dient beispielsweise zur Information eines Technikers, der daraufhin die Fehlfunktion beheben kann.

Gemäß einer weiteren vorteilhaften Ausführungsform des erfindungsgemäßen Verfahrens kann außerdem vorgesehen sein, dass - zur Inbetriebsetzung sich die jeweilige lokale Mess- und Steuereinheit mit einer eindeutigen Kommunikationsadresse und einer Angabe über ihren Einbauort bei der zumindest einen Netzsteuereinrichtung anmeldet.

Auf diese Weise kann die Inbetriebnahme und Konfiguration der lokalen Mess- und Steuereinheit sowie ihre Verbindung mit der Netzsteuereinrichtung in vergleichsweise einfacher Weise durchgeführt werden, da die lokale Mess- und Steuereinheit der Netzsteuereinrichtung im einfachsten Fall lediglich ihre Kommunikationsadresse sowie ihren Einbauort übermitteln muss. Weitere Informationen, wie z.B. eine Identifikation einer an die lokale Mess- und Steuereinheit angeschlossenen steuerbaren Komponente, können zusätzlich übermittelt werden oder sind bereits in einer Datenbank hinterlegt, auf die die Netzsteuereinrichtung zugreifen kann.

In diesem Zusammenhang kann zudem in vorteilhafter Weise vorgesehen sein, dass bei der Inbetriebsetzung ein Protokollkonverter auf die jeweilige lokale Mess- und Steuereinheit übertragen wird, der zur Umsetzung von Steuerbefehlen der Netzsteuereinrichtung in Ansteuersignale für eine regelbare Komponente des Ortsnetzes eingerichtet ist.

Auf diese Weise kann, beispielsweise von einem Konfigurationsgerät (Konfigurationswerkzeug) oder mittels der Netzsteuereinrichtung, ein geeigneter Protokollkonverter auf die lokale Mess- und Steuereinheit übertragen werden, so dass die lokale Mess- und Steuereinheit die Steuerbefehle der Netzsteuereinrichtung als Ansteuersignale an die angeschlossene regelbare Komponente weitergeben kann.

Eine weitere vorteilhafte Ausführungsform des erfindungsgemäßen Verfahrens sieht schließlich vor, dass für den Fall, dass eine lokale Mess- und Steuereinheit in einem mehrphasigen Ortsnetz eine einphasige Messung der Spannung vornimmt, mittels der zumindest einen Netzsteuereinrichtung für die von einer solchen Mess- und Steuereinheit empfangenen Spannungsmesswerte korrigierte Spannungsmesswerte berechnet werden, wobei ein Unsymmetriefaktor zwischen den einzelnen Phasen des Ortsnetzes berücksichtigt wird.

Auf diese Weise kann im Rahmen einer Schlechtfallbetrachtung der maximale oder minimale Spannungswert ermittelt werden. Der Unsymmetriefaktor kann hierbei beispielsweise durch Messung am Einspeisepunkt, z.B. in einer Ortsnetzstation, oder durch Normvorgaben bestimmt werden.

Die oben genannte Aufgabe wird auch durch eine Netzsteuereinrichtung zum Steuern eines elektrischen Ortsnetzes gelöst, wobei das Ortsnetz an zumindest einem Einspeisepunkt mit einem übergeordneten Energieversorgungsnetz verbunden ist, wobei die Netzsteuereinrichtung eine Messwerterfassungseinrichtung zum Empfangen von Spannungsmesswerten und Strommesswerten und eine Recheneinheit zum Ermitteln eines elektrischen Betriebszustands des Ortsnetzes anhand zumindest eines Teils der Messwerte aufweist.

Erfindungsgemäß ist vorgesehen, dass die Recheneinheit dazu eingerichtet ist, für den Fall, dass der Betriebszustand unzulässig und/oder ungewünscht ist, während einer ersten Steuerphase erste Maßnahmen zur Beeinflussung der Spannung im Ortsnetz zu ergreifen und während einer zweiten Steuerphase, die sich zeitlich an die erste Steuerphase anschließt, zweite Maßnahmen zur Beeinflussung des Stroms am Einspeisepunkt zu ergreifen.

Schließlich wird die oben genannte Aufgabe auch durch ein System zum Steuern eines elektrischen Ortsnetzes gelöst, wobei das Ortsnetz an zumindest einem Einspeisepunkt mit einem übergeordneten Energieversorgungsnetz verbunden ist, wobei das System zumindest eine Netzsteuereinrichtung der voranstehend beschriebenen Art sowie zumindest eine lokale Mess- und Steuereinheit aufweist, die zur Messung einer Spannung in dem elektrischen Ortsnetz eingerichtet ist.

Hinsichtlich der erfindungsgemäßen Netzsteuereinrichtung und des erfindungsgemäßen Systems gelten alle zu dem erfindungsgemäßen Verfahren voranstehend und nachfolgend gemachten Ausführungen und umgekehrt in entsprechender Weise, insbesondere sind die erfindungsgemäße Netzsteuereinrichtung sowie das erfindungsgemäße System zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Netzsteuereinrichtung und des erfindungsgemäßen Systems wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Einrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Hierzu zeigen

Figur 1    eine schematische Ansicht eines Ausführungsbeispiels eines elektrischen Ortsnetzes;

Figur 2    eine schematische Ansicht einer Netzsteuereinrichtung;

Figur 3    eine schematische Ansicht einer lokalen Mess- und Steuereinheit;

Figur 4    ein Konfigurationswerkzeug zur Inbetriebnahme von lokalen Mess- und Steuereinheiten;

Figur 5    ein erstes beispielhaftes Diagramm zur Erläuterung der Vorgehensweise zur Stabilisierung eines Ortsnetzes; und

Figur 6    ein zweites beispielhaftes Diagramm zur Erläuterung der Vorgehensweise zur Stabilisierung eines Ortsnetzes.

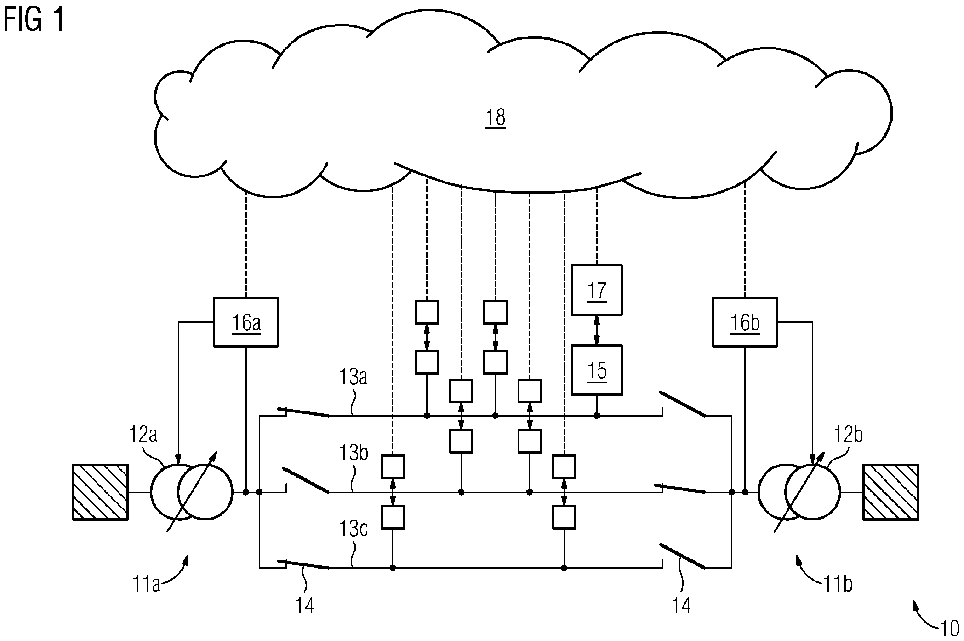

Figur 1 zeigt in schematischer Darstellung ein elektrisches Ortsnetz 10, das an zwei Einspeisepunkten 11a, 11b mit einem oder mehreren übergeordneten Energieversorgungsnetzen (in Figur 1 lediglich schematisch dargestellt) verbunden ist. An den Einspeisepunkten sind stufbare Transformatoren 12a, 12b vorgesehen, mit denen das Spannungsniveau des jeweiligen übergeordneten Energieversorgungsnetzes auf das im Ortsnetz gewünschte Spannungsniveau (üblicherweise < 1kV) transformiert wird. Das Ortsnetz 10 weist beispielhaft drei Abgänge 13a-c auf, die sich im Bereich der Einspeisepunkte 11a, 11b treffen. Jeder Abgang 13a-c ist durch Schalteinrichtungen 14 an beiden Seiten von dem jeweiligen Einspeisepunkt abtrennbar. Mit den Abgängen 13a-c sind neben in Figur 1 nicht gezeigten (nichtsteuerbaren) Lasten auch hinsichtlich ihrer Leistungsabgabe ins Ortsnetz und/oder ihrer Leistungsentnahme aus dem Ortsnetz steuerbare Komponenten 15 verbunden (beispielhaft ist in Figur 1 nur eine steuerbare Komponente 15 hervorgehoben), bei der es sich beispielsweise um eine Ladestation für ein Elektrofahrzeug, eine PV-Anlage, einen elektrischen Energiespeicher oder eine Wärmepumpe handeln kann.

Das Ortsnetz 10 ist auf einen Betrieb innerhalb bestimmter Grenzen ausgelegt, beispielsweise ist innerhalb des Ortsnetzes 10 ein Spannungsband zwischen einer zulässigen Maximalspannung und einer zulässigen Minimalspannung vorgegeben. Aufgrund physikalischer Gegebenheiten von Leitungen und Transformatoren ist zudem ein maximaler zulässiger Stromfluss an den Einspeisepunkten 11a, 11b vorgegeben. Dem Betreiber des Ortsnetzes 10 obliegt es, diese Randbedingungen beim Netzbetrieb einzuhalten.

Zur einfachen Steuerung des Ortsnetzes 10 wird ein Automatisierungssystem vorgeschlagen, bei dem zumindest eine Netzsteuereinrichtung 16 mit lokalen Mess- und Steuereinheiten 17 zusammenwirkt. Dabei kann die zumindest eine Netzsteuereinrichtung 16 im Bereich eines Einspeisepunktes 11a, 11b vorgesehen sein, während die lokalen Mess- und Steuereinheiten 17 an den Abgängen 13a-c angeordnet sind, wobei vorzugsweise jeder steuerbaren Komponente 15 eine lokale Mess- und Steuereinheit 17 zugeordnet ist. In Figur 1 sind beispielhaft zwei Netzsteuereinrichtungen 16 dargestellt, wobei sich eine Netzsteuereinrichtung 16a im Bereich des Einspeisepunktes 11a und eine andere Netzsteuereinrichtung 16b im Bereich des Einspeisepunkte 11b befindet. Außerdem ist ein Figur 1 eine lokale Mess- und Steuereinheit 17 hervorgehoben dargestellt, die der hervorgehoben dargestellten steuerbaren Komponente 15 zugeordnet ist. Daneben kann das Ortsnetz 10 eine beliebige Anzahl steuerbarer Komponenten 15 und lokaler Mess- und Steuereinheiten 17 aufweisen. Auch ist es möglich, dass das Ortsnetz 10 nur eine Netzsteuereinrichtung 16 oder mehr als zwei Netzsteuereinrichtungen 16 umfasst.

Die Netzsteuereinrichtungen 16 und die lokalen Mess- und Steuereinheiten 17 stehen über ein Kommunikationsmedium 18 miteinander in Verbindung. Bei dem Kommunikationsmedium kann es sich beispielsweise um einen Kommunikationsbus, ein lokales Kommunikationsnetz, ein Weitbereichskommunikationsnetz oder das Internet sowie eine Kombination daraus handeln.

Dabei kann die jeweilige Kommunikationsverbindung der Netzsteuereinrichtungen 16 kabelgebunden oder drahtlos oder als Kombination aus beidem ausgeführt sein. Die Bandbreite zur Kommunikation muss hierbei ausreichen, um Messwerte, Steuerbefehle und ggf. Firmwareupdates für die Mess- und Steuereinheiten 17 übertragen zu können. Jedes Gerät (Netzsteuereinrichtungen 16 und lokalen Mess- und Steuereinheiten 17) in diesem Kommunikationsnetz muss durch eine eindeutige Kommunikationsadresse identifizierbar sein.

Mit dem vorliegend beschriebenen Automatisierungssystem erfolgt eine Stabilisierung eines Ortsnetzes wie nachfolgend für das beispielhafte Ortsnetz 10 der Figur 1 beschrieben. Die Netzsteuereinrichtungen 16, die sich z.B. in jeweiligen Ortsnetzstationen im Bereich der Einspeisepunkte 11a, 11b befinden, überwachen das Ortsnetz 10 und ermitteln im Fall von drohenden oder tatsächlichen Netzengpässen, die als unzulässige bzw. ungewünschte Betriebszustände des Ortsnetzes angesehen werden, Maßnahmen zur Stabilisierung des Ortsnetzes. Zur Realisierung der ermittelten Maßnahmen erzeugt die jeweilige Netzsteuereinrichtung 16 beispielsweise Korrektursignale für die steuerbaren Komponenten 15 im Ortsnetz 10 und/oder für aktive Netzkomponenten, die sich z.B. in einer Ortsnetzstation oder im Ortsnetz 10 selbst befinden. Zu den aktiven Netzkomponenten zählen zum Beispiel die stufbaren Transformatoren 12a, 12b.

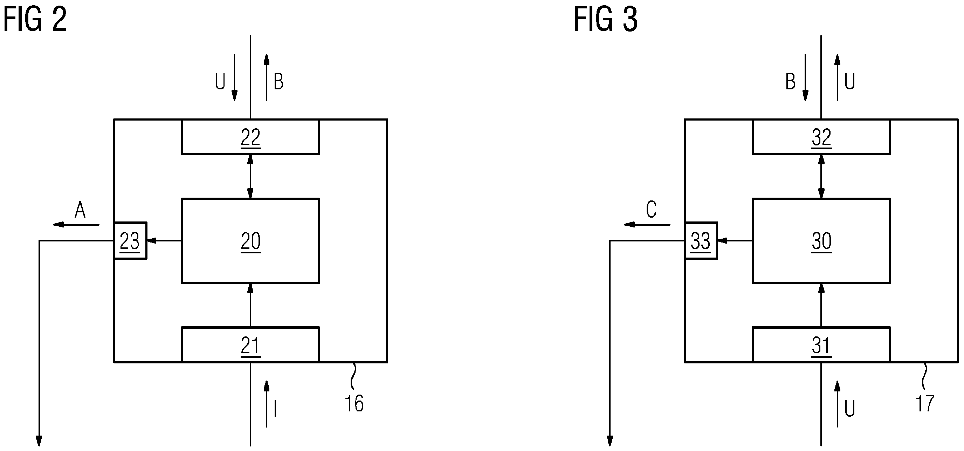

Ein Ausführungsbeispiel einer Netzsteuereinrichtung 16 ist in Figur 2 schematisch dargestellt. Die beispielhaft dargestellte Netzsteuereinrichtung 16 umfasst eine Recheneinrichtung 20, beispielsweise in Form eines Microprozessors oder eines ASICs, die zur Auswertung von Strom- und Spannungsmesswerten zur Ermittlung eines Betriebszustands des Ortsnetzes 10 eingerichtet ist. Außerdem ist die Recheneinrichtung 20 dazu ausgebildet, erste und/oder zweite Maßnahmen zu ermitteln, um ungewünschten und/oder unzulässigen Betriebszuständen des Ortsnetzes 10 entgegenzuwirken.

Hierzu ist die Recheneinrichtung 20 einerseits mit einer Messwerterfassungseinrichtung 21 (kurz auch als "Messeinrichtung" bezeichnet) der Netzsteuereinrichtung 16 verbunden, mit der Strommesswerte I erfasst werden, die im Bereich eines Einspeisepunktes 11 des Ortsnetzes 10 erfasst worden sind. Die Messeinrichtung 21 kann dabei zur Erfassung analoger Signale dienen, die anschließend in digitale Messwerte umgesetzt werden. Alternativ kann die Messeinrichtung 21 auch zur Erfassung digitaler Signale, z.B. Messwerte enthaltenden Telegrammen, eingerichtet sein, falls eine Digitalisierung der Signale bereits bei ihrer Messung erfolgt. Außerdem weist die Netzsteuereinrichtung 16 eine Kommunikationseinheit 22 auf, die mit dem Kommunikationsmedium 18 (vgl. Figur 1) in Verbindung steht. Die Kommunikationseinheit 22 kann hierbei beispielsweise zum Datenaustausch gemäß dem IP-Protokoll eingerichtet sein. Über die Kommunikationseinheit 22 empfängt die Netzsteuereinrichtung 16 einerseits Spannungsmesswerte U, die mittels einer oder mehrerer lokaler Mess- und Steuereinheiten 17 erfasst worden sind, und übermittelt andererseits an die eine oder mehreren lokalen Mess- und Steuereinheiten 17 Steuerbefehle B, die Maßnahmen angeben, um einem ungewünschten und/oder unzulässigen Betriebszustand des Ortsnetzes 10 entgegenzuwirken. Schließlich weist die Netzsteuereinrichtung 16 eine lokale Ausgabeeinheit 23 auf, mit der sie Ansteuersignale A für aktive Netzkomponenten im Ortsnetz, z.B. die stufbaren Transformatoren 12, abgeben kann.

Die lokalen Mess- und Steuereinheiten 17 erfüllen generell zwei Aufgaben: Einerseits ermitteln sie an Netzanschlusspunkten von steuerbaren Komponenten 15 die elektrische Spannung im Ortsnetz 10 und übermitteln sie über das Kommunikationsmedium 18 der Netzsteuereinrichtung 16. Die Messung der Spannung kann dabei ein- oder dreiphasig erfolgen. Andererseits empfangen sie von der Netzsteuereinrichtung 16 im Falle von Netzengpässen (ungewünschten bzw. unzulässigen Betriebszuständen des Ortsnetzes 10) Steuerbefehle B und wandeln diese bei Bedarf von einem ersten Kommunikationsprotokoll in ein zweites Kommunikationsprotokoll um, das von der jeweiligen steuerbaren Komponente 15 verstanden wird.

Ein Beispiel einer lokalen Mess- und Steuereinheit 17 ist in Figur 3 dargestellt. Die beispielhaft dargestellte lokale Mess- und Steuereinheit 17 umfasst eine Recheneinrichtung 30, beispielsweise in Form eines Microprozessors oder eines ASICs, die zur generellen Steuerung der lokalen Mess- und Steuereinheit 17 eingerichtet ist. Hierzu ist die Recheneinrichtung 30 einerseits mit einer Messeinrichtung 31 der lokalen Mess- und Steuereinheit 17 verbunden, mit der Spannungsmesswerte U an einer Anschlussstelle eine steuerbaren Komponente 15 erfasst werden. Die Messeinrichtung 31 kann dabei zur Erfassung analoger Signale dienen, die anschließend in digitale Messwerte umgesetzt werden. Alternativ kann die Messeinrichtung 31 auch zur Erfassung digitaler Signale, z.B. Messwerte enthaltenden Telegrammen, eingerichtet sein, falls eine Digitalisierung der Signale bereits bei ihrer Messung erfolgt. Außerdem weist die lokale Mess- und Steuereinheit 17 eine Kommunikationseinheit 32 auf, die mit dem Kommunikationsmedium 18 (vgl. Figur 1) in Verbindung steht. Die Kommunikationseinheit 32 kann hierbei beispielsweise zum Datenaustausch gemäß dem IP-Protokoll eingerichtet sein. Über die Kommunikationseinheit 32 sendet die lokale Mess- und Steuereinheit 17 einerseits die erfassten Spannungsmesswerte U an die Netzsteuereinrichtung 16 und empfängt andererseits von der Netzsteuereinrichtung 16 die Steuerbefehle B. Die Steuerbefehle B werden mittels eines in der Recheneinrichtung 30 enthaltenen Protokollumsetzers in für die angeschlossene steuerbare Komponente 15 verständliche Ansteuersignale C umgesetzt und über einen lokale Ausgabeeinheit 33 der lokalen Mess- und Steuereinheit 17 an die steuerbare Komponente 15 übermittelt.

Das Automatisierungssystem zum Betrieb des Ortsnetzes 10 basiert damit einerseits auf dezentral angeordneten Netzsteuereinrichtungen 16 und andererseits auf den lokalen Mess- und Steuereinheiten 17. Diese werden üblicherweise von den Betreibern der steuerbaren Komponenten 15 ins Ortsnetz integriert. Zu diesem Zweck wird ein einfaches Verfahren zur Inbetriebnahme der Mess- und Steuereinheiten 17 benötigt, das nachfolgend beispielhaft beschrieben wird. Das Verfahren zur Inbetriebnahme macht es sich zunutze, dass relevante steuerbare Komponenten 15 in Form von Energieanlagen wie Ladeeinrichtungen, Wärmepumpen, Photovoltaikanlagen etc. üblicherweise beim Betreiber des Ortsnetzes 10 angemeldet werden müssen. Im Zuge des Anmeldevorgangs prüfen Mitarbeiter des Netzbetreibers unter anderem, ob der Anschluss der Energieanlage technisch machbar ist. In diesem Arbeitsschritt wird bestimmt, an welchen Ortsnetzstationen und Abgängen des Ortsnetzes eine Energieanlage angeschlossen wird.

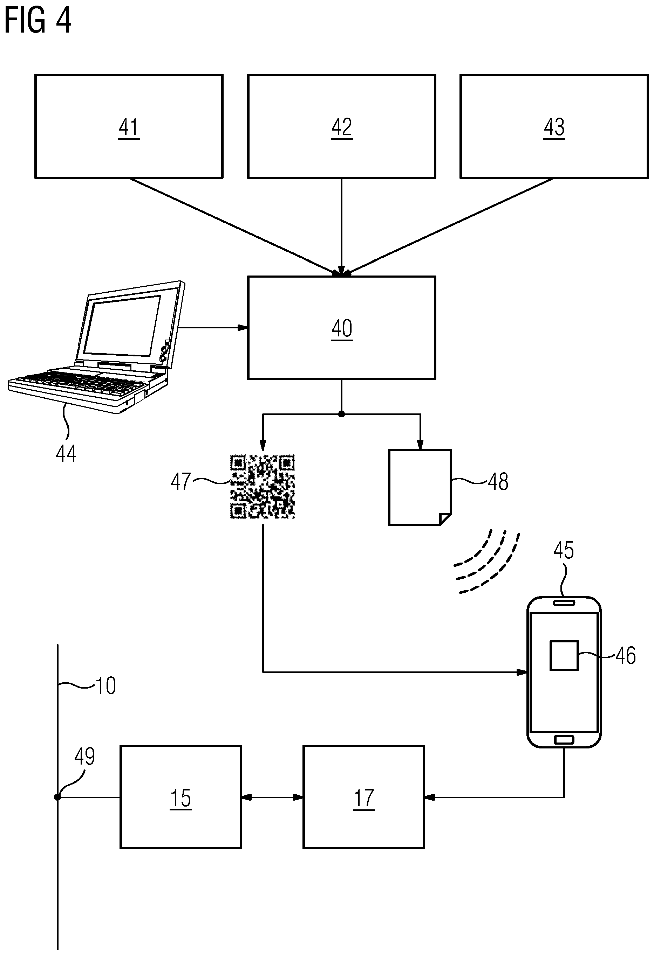

In diesem Zusammenhang wird gemäß der Darstellung in Figur 4 ein Konfigurationswerkzeug 40 vorgeschlagen, mit dessen Hilfe die Zuordnung einer lokalen Mess- und Steuereinheit 17 zu einer oder mehreren Netzsteuereinrichtungen 16 so beschrieben wird, dass diese Zuordnung den dezentralen Systemen zur Führung des Ortsnetzes einfach bekannt gemacht werden kann. Hierfür greift das Konfigurationswerkzeug 40 entweder über computerisierte Schnittstellen auf Daten zurück, die in bereits vorhandenen IT-Systemen des Netzbetreibers (z.B. einem Kundenverwaltungssystem 41, einem Assetmanagementsystem 42 und/oder einem Geoinformationssystem 43) vorliegen oder ein Mitarbeiter des Netzbetreibers gibt die Zuordnungsinformation manuell über eine Bedienoberfläche 44 des Konfigurationswerkzeugs 40 ein. Das Konfigurationswerkzeug 40 kann dabei sowohl als separates IT-System beim Netzbetreiber ausgeführt oder als Cloud-System sein, das von einem Dritten als Service für den Netzbetreiber bereitstellt wird.

Das Konfigurationswerkzeug 40 erzeugt aus den Informationen bzw. den manuellen Eingaben Konfigurationsdaten für die lokalen Mess- und Steuereinheiten 17, die mittels einer Applikation bzw. App 46 auf einem mobilen oder stationären Rechner 45 (z.B. Smartphone, Tablet, Laptop, Desktop) auf die lokale Mess- und Steuereinheit 17 übertragen werden können.

Nachfolgend wird beispielhaft eine Möglichkeit der Vorgehensweise zur Inbetriebsetzung einer lokalen mess- und Steuereinheit 17 beschrieben.

Die Inbetriebsetzung startet beispielhaft mit einer formalen, z.B. schriftlichen, Anmeldung einer steuerbaren Komponente 15 eines Endkunden beim Netzbetreiber des Ortsnetzes 10. Im Allgemeinen lässt sich ein Netzanschlusspunkt 49, an dem die steuerbare Komponente 15 und eine zugehörige Mess- und Steuereinheit 17 installiert werden, durch Informationen bezüglich z.B. einer Zählernummer, einer Kundennummer oder Adressdaten des Endkunden eindeutig bestimmen. Nach der Identifikation des Netzanschlusspunktes 49 kann nun bestimmt werden, welche Ortsnetztransformatoren den Netzanschlusspunkt 49 prinzipiell versorgen können und an welchem ihrer Abgänge der Netzanschlusspunkt 49 jeweils angeschlossen sein soll. Nach diesen Vorgängen steht fest, welche Netzsteuereinrichtung 16 mit der neuen lokalen Mess- und Steuereinheit 17 zusammenwirken muss und unter welcher Kommunikationsadresse diese im Netzwerk erreichbar ist. Zusätzlich kann auch die geographische Position des Netzanschlusspunktes 49 ermittelt werden. Wie oben bereits erläutert, werden diese Informationen entweder durch automatisierte Datenanfragen des Konfigurationswerkzeuges 40 an die bereits installierten IT-Systeme 41, 42, 43 des Netzbetreibers oder durch manuelle Eingaben eines Mitarbeiters, der z.B. den Anschlussantrag für die Mess- und Steuereinheit 17 bearbeitet, gewonnen.

In einem nächsten Schritt bereitet das Konfigurationswerkzeug 40 die Daten so auf, dass sie von einer Applikation 46 auf einem Rechner 45 (z.B. Smartphone, Tablet, Laptop, Desktop) des Endkunden aufgenommen werden. Beispielsweise kann die Information in Form eines QR-Codes 47 bereitgestellt werden, der dem Endkunden in einer schriftlichen Genehmigung seines Anschlussantrags mitgeteilt und durch Einlesen (z.B. mittels einer Kamerafunktion) auf den Rechner 46 übertragen wird. Alternativ oder zusätzlich kann dem Endkunden eine Konfigurationsdatei 48 bereitgestellt werden, welche die App 46 von dem Konfigurationswerkszeug 40 herunterlädt. Weiter alternativ oder zusätzlich kann die App 46 mittels einer speziellen computerisierten Schnittstelle (API - application program interface) auf die von dem Konfigurationswerkszeug 40 bereitgestellte individuelle Konfigurationsdatei 48 online zuzugreifen.

Die Konfigurationsdaten umfassen dabei eine oder mehrere der folgenden Informationen:

- eine eindeutige Kennung des Netzanschlusspunktes 49;

- eine Liste mit eindeutigen Bezeichnern der Ortsnetzstationen, die diesen Netzanschlusspunkt 49 versorgen bzw. versorgen können;

- eine Liste mit eindeutigen Bezeichnern der Abgänge in den Ortsnetzstationen, die diesen Netzanschlusspunkt 49 versorgen bzw. versorgen können;

- eine Liste mit eindeutigen Bezeichnern der Kabelverteilerschränke, die sich auf dem Abgang zwischen der Ortsnetzstation und dem Netzanschlusspunkt 49 befinden

- eine Liste mit Kommunikationsadressen der mindestens einen Netzsteuereinrichtung 16, die in den Ortsnetzstationen installiert ist, die diesen Netzanschlusspunkt 49 versorgt bzw. versorgen kann;

- die geographische Position des Netzanschlusspunktes 49.

Nachdem die Konfigurationsdaten beim Endkunden vorliegen, kann die lokale Mess- und Steuereinheit 17 beim Endkunden durch einen Installateur oder ggf. durch den Endkunden selbst in Betrieb genommen werden. Dazu wird die lokale Mess- und Steuereinheit 17 gestartet und nimmt zunächst Kontakt zu einem lokalen Datennetz des Endkunden auf. Diese Kommunikation kann drahtgebunden oder drahtlos geschehen. Danach werden mit Hilfe des Rechners 45 des Endkunden, der sich in demselben lokalen Datennetz befindet, die Konfigurationsdaten auf die lokale Mess- und Steuereinheit 17 übertragen. Dazu sucht die auf dem Rechner 45 ausgeführte App 46 zunächst die lokale Mess- und Steuereinheit 17 im lokalen Datennetz und stellt die Verbindung her. Anschließend werden die Konfigurationsdaten von der App 46 an die lokale Mess- und Steuereinheit 17 übermittelt und dort gespeichert. Falls die von dem konfigurationswerkzeug 40 übermittelten Konfigurationsdaten keine geographischen Positionsdaten des Netzanschlusspunktes 49 enthalten, kann eine ggf. vorhandene Ortungsfunktion des Rechners 45 genutzt, um diese Positionsdaten hinzuzufügen.

In einem abschließenden Konfigurationsschritt kann mittels der App 46 schließlich die steuerbare Komponente 15 aus, die mit der lokalen Mess- und Steuereinheit 17 zusammenarbeiten soll (ggf. auch mehrere steuerbare Komponenten), z.B. eine Ladeeinrichtung für Elektrofahrzeuge. Bevorzugt werden die zu der steuerbaren Komponente 15 passenden Protokollkonverter ebenfalls auf die lokale Mess- und Steuereinheit 17 geladen. Der Protokollkonverter wird ggf. benötigt, um Steuerbefehle der Netzsteuereinrichtung 16, die an die lokale Mess- und Steuereinheit 17 gesendet werden, in für die steuerbare Komponente 15 verständliche Ansteuersignale umzusetzen.

Beispielhaft kann hierzu die App 46 nach Auswahl der steuerbaren Komponente 15 einen passenden Protokollkonverter für die lokale Mess- und Steuereinheit 17 bereitstellen und ihn auf diese übertragen. Der Protokollkonverter kann dabei z.B. Bestandteil einer Bibliothek der App 46 sein oder in einem zentralen IT-System liegen (z.B. einem App-Store), aus dem die App 46 den Protokollkonverter herunterlädt. Alternativ kann auch vorgesehen sein, dass die App 46 der lokalen Mess- und Steuereinheit 17 mitteilt, welchen Protokollkonverter sie benötigt, und diese den Protokollkonverter selbst aus dem zentralen IT-System lädt. In diesem Schritt wird der lokalen Mess- und Steuereinheit 17 außerdem die Kommunikationsadresse der steuerbaren Komponente 15 mitgeteilt.

Mit der Auswahl der steuerbaren Komponente 15 kann zudem ein elektrischer Leistungsbereich bestimmt werden, innerhalb dessen diese ihre Leistung variieren kann. Weiterhin kann vorgesehen sein, dass das Konfigurationswerkzeug 40 die zumindest eine relevante Netzsteuereinrichtung 16 vorab über die anhängige Inbetriebsetzung der lokalen Mess- und Steuereinheit 17 informiert, damit es überwachen kann, ob die fragliche lokale Mess- und Steuereinheit 17 sich in der Folge tatsächlich anmeldet. Dazu sendet das Konfigurationswerkzeug 40 eine eindeutige Kennung des Netzanschlusspunktes 49 an die zumindest eine relevante Netzsteuereinrichtung 16. Diese kann dann in zyklischen Abständen prüfen, ob sich die lokale Mess- und Steuereinheit 16 bei ihr angemeldet hat. Falls dies innerhalb einer vorgegebenen Zeitdauer nicht geschehen ist, sendet die Netzsteuereinrichtung 16 eine Fehlermeldung, z.B. an ein überlagertes IT-System.

Nach der Einrichtung der lokalen Mess- und Steuereinheit 17 nimmt diese Kontakt mit der Netzsteuereinrichtung 16 auf und meldet sich dort an. In dem Prozess der Anmeldung überträgt sie einige oder alle der Konfigurationsdaten an die Netzsteuereinrichtung 16. Die übermittelten Daten können unter anderem die folgenden Informationen beinhalten:

- eine Kommunikationsadresse, unter der die lokale Mess- und Steuereinheit 17 erreicht werden kann;

- den Abgang, an dem die lokale Mess- und Steuereinheit 17 angeschlossen ist;

- ggf. Kabelverteilerschränke, die zwischen dem Netzanschlusspunkt 49 und der Ortsnetzstation liegen

- der Leistungsbereich der angeschlossenen steuerbaren Komponente 15;

- die geographische Position des Netzanschlusspunktes 49.

Damit ist die Inbetriebsetzung der lokalen Mess- und Steuereinheit 17 abgeschlossen. Die zumindest eine Netzsteuereinrichtung 16 kennt daraufhin die fragliche lokalen Mess- und Steuereinheit 17 sowie ggf. weitere an sie angeschlossene lokale Mess- und Steuereinheiten 17, die sich in dem Ortsnetz 10 befinden, deren geographische Position und den variablen Leistungsbereich der jeweils zugeordneten steuerbaren Komponente 15. Die lokale Mess- und Steuereinheit 15 wiederum kennt die Kommunikationsadresse der zumindest einen Netzsteuereinrichtung, die in der Ortsnetzstation eingebaut ist.

Nachfolgend wird beschrieben, wie mit dem Automatisierungssystem das Ortsnetz 10 zu betrieben wird.

Im laufenden Betrieb melden die lokalen Mess- und Steuereinheiten 17 zyklisch die von ihnen gemessenen Spannungsmesswerte an die zumindest einen Netzsteuereinrichtung 16, die ihnen während der Inbetriebnahme mitgeteilt wurde. Jede Netzsteuereinrichtung 17 ermittelt daraufhin zunächst, ob sie den fraglichen Netzanschlusspunkt 49 tatsächlich versorgt, an dem die jeweilige lokale Mess- und Steuereinheit 17 angeschlossen ist. Dazu prüft sie, ob zwischen der Ortsnetzstation und dem Netzanschlusspunkt eine geöffnete Schalteinrichtung vorhanden ist, d.h. ob der entsprechende Abgang aus ihrer Sicht überhaupt ein- bzw. ausgeschaltet ist. Beispielsweise sind aus Sicht der Netzsteuereinrichtung 16a in Figur 1 die Abgänge 13a und 13c eingeschaltet (Schalteinrichtungen 14 geschlossen), während aufgrund einer geöffneten Schalteinrichtung 14 der Abgang 13b ausgeschaltet ist. Ein umgekehrtes Bild ergibt sich aus Sicht der anderen Netzsteuereinrichtung 16b.

Falls der Abgang ausgeschaltet ist, werden die von dem Anschlussgerät gemeldeten Spannungsmesswerte von der Netzsteuereinrichtung 16 verworfen und nicht gespeichert. Falls der Abgang eingeschaltet ist, werden die gemeldeten Spannungsmesswerte von der Netzsteuereinrichtung 16 gespeichert.

Zur Prüfung des Einschaltstatus des jeweiligen Abgangs ist eine Kenntnis des Schaltzustands der jeweiligen Schalteinrichtung 14 in der Netzsteuereinrichtung 16 notwendig. Zur Prüfung des Schaltzustandes der jeweiligen Schalteinrichtung 14 kann vorgesehen sein, dass der jeweiligen Netzsteuereinrichtung 16 die entsprechenden Schaltzustände der Schalteinrichtungen 14 ihrer Abgänge bekanntgemacht werden. Dies kann beispielsweise geschehen durch

- eine manuelle Eingabe der Schaltzustände, z.B. mittels eines mobilen Rechners, der mit der Netzsteuereinrichtung 16 kommuniziert;

- eine computerisierte Programmschnittstelle, mit der die Netzsteuereinrichtung 16 diese Informationen von einem überlagerten System (z.B. einem SCADA System) empfangen;

- eine Übertragung dieser Informationen aus den Sicherungsleisten der Abgänge, die den Schaltzustand melden;

- eine optische Auswertung der Belegung der Sicherungsleisten in der Ortsnetzstation.

Weiterhin kann vorgesehen sein, dass die jeweilige Netzsteuereinrichtung 16 zyklisch prüft, ob die ihr zugeordneten lokalen Mess- und Steuereinheiten 17 regelmäßig Spannungsmesswerte liefern. Falls das nicht der Fall ist, wird eine entsprechende Fehlermeldung abgegeben und z.B. an ein überlagertes IT-System geschickt.

Nachdem in einem Zeitzyklus alle lokalen Mess- und Steuereinheiten 17, die einer jeweiligen Netzsteuereinrichtung 16 zugeordnet sind, ihre Spanungsmesswerte übertragen haben, berechnet die Netzsteuereinrichtung 16 eine Zustandsschätzung des Ortsnetzes. Dabei prüft sie insbesondere, ob unzulässige und/oder ungewünschte Betriebszustände vorliegen.

Dazu werden in einer ersten Steuerphase die Spannungsmesswerte der lokalen Mess- und Steuereinheiten 17 herangezogen. Dabei kann die jeweilige Mess- und Steuereinheit 17 entweder zur einphasigen oder zur mehrphasigen Spannungsmessung ausgebildet sein. Bei der einphasigen Messung ist an einer zufällig ausgewählten (und der Netzsteuereinrichtung üblicherweise unbekannten) Phase des Abgangs ein Spannungssensor installiert, der zur Messung verwendet wird. Bei einer mehrphasigen Messung sind Sensoren an allen (z.B. allen drei) Phasen vorgesehen.

Im Fall einer mehrphasigen Messung können die Spannungsmesswerte direkt weiterverarbeitet werden. Dazu werden aus den übermittelten Spannungswerten der minimale und der maximale Spannungswert aller zur Messung herangezogenen Netzanschlusspunkte des Ortsnetzes bestimmt. Diese minimalen bzw. maximalen Spannungsmesswerte werden daraufhin zur Ermittlung des Betriebszustands mit einem erlaubten Spannungsband verglichen. Bei einer Verletzung (d.h. Überschreitung des oberen Spannungsgrenzwertes des Spannungsbandes oder Unterschreitung des unteren Spannungsgrenzwertes des Spannungsbandes) wird ein unzulässiger bzw. ungewünschter Betriebszustand des Ortsnetzes festgestellt. Dabei kann die Höhe der Über- bzw. Unterschreitung zur Klassifizierung herangezogen werden, ob der sich ergebende Betriebszustand unzulässig ist (d.h. beispielsweise eine konkrete negative Beeinträchtigung des Ortsnetzes oder angeschlossener Komponenten vorliegt) oder ob er lediglich ungewünscht ist (d.h. beispielsweise bei fortschreitender Entwicklung zu einem unzulässigen Zustand führen könnte).

Im Falle von einphasigen Messungen der Spannung an den Netzanschlusspunkten 49 werden von der Netzsteuereinrichtung 16 in einem ersten Schritt die gelieferten Spannungsmesswerte überarbeitet. Dazu wertet die Netzsteuereinrichtung 16 zunächst eine dreiphasige Spannungsmessung in der Ortsnetzstation selbst aus und bestimmt für jede Phase das Verhältnis der tatsächlichen Spannung zur definierten Nennspannung. Diese Größe wird als phasenbezogene Unsymmetrie der Spannung angesehen. Im Folgenden wird nun näherungsweise angenommen, dass diese Unsymmetrie in dem gesamten Niederspannungsnetz dasselbe Verhältnis aufweist.

In einem weiteren Schritt werden aus den übermittelten Spannungswerten der minimale und der maximale Spannungsmesswert aller zur Messung herangezogenen Netzanschlusspunkte des Ortsnetzes bestimmt. Im Sinne einer Schlechtfallbetrachtung wird zur Korrektur der empfangenen Spannungsmesswerte nun angenommen, dass der maximale Spannungsmesswert auf derjenigen Phase gemessen wurde, die in der Ortsnetzstation den kleinsten Spannungswert zeigt, und der minimale Spannungsmesswert auf derjenigen Phase gemessen wurde, die in der Ortsnetzstation den höchsten Spannungswert zeigt. Dies hätte zur Folge, dass das tatsächliche Maximum der Spannung etwas höher liegt als der empfangene maximale Spannungsmesswert und das tatsächliche Minimum der Spannung etwas niedriger liegt als der empfangene minimale Spannungsmesswert. Der jeweilige maximale bzw. minimale Spannungsmesswert wird unter Verwendung der jeweiligen phasenbezogenen Unsymmetrie korrigiert, indem die beiden Spannungsextreme mit ihren jeweiligen phasenbezogenen Unsymmetriefaktoren multipliziert werden.

Alternativ zur Unsymmetriebestimmung durch Messung in der Ortsnetzstation kann vorgesehen sein, dass die jeweiligen Extremwerte der Spannung mit einem Faktor multipliziert werden, der aus der maximal zulässigen Unsymmetrie gemäß der gültigen Normen resultiert.

Der korrigierte minimale bzw. maximale Spannungsmesswert wird daraufhin zur Ermittlung des Betriebszustands mit dem erlaubten Spannungsband verglichen. Bei einer Verletzung wird ein unzulässiger bzw. ungewünschter Betriebszustand des Ortsnetzes festgestellt.

In der ersten Steuerphase bestimmt die Netzsteuereinrichtung erste Maßnahmen zur Stabilisierung des Ortsnetzes. Darauf wird später eingehender eingegangen.

An die erste Steuerphase schließt sich eine zweite Steuerphase an. In dieser werden vorgegebene Stromgrenzwerte bzw. Leistungsgrenzwerte überprüft. Dazu werden Strommesswerte, die in der Ortsnetzstation lokal ermittelt werden, mit den maximal erlaubten Strombelastungen der Abgänge und/oder die aktuelle Scheinleistung (die sich beispielsweise aus einer Messung von Strom- und Spannungszeigern in der Ortsnetzstation ergibt) mit der maximalen Scheinleistung des an dem Einspeisepunkt des Ortsnetzes vorgesehenen Transformators verglichen. Für den Fall, dass im Verlauf der Leitungszüge Kabelverteilerschränke installiert sind, in denen Strommessungen installiert sind, können diese ebenfalls mit den zulässigen Grenzwerten verglichen werden.

Sofern in der zweiten Steuerphase Verletzungen der Strom- bzw. Leistungsgrenzwerte erkannt werden, wird ebenfalls auf einen unzulässigen bzw. ungewünschten Betriebszustand des Ortsnetzes geschlossen und die Netzsteuereinrichtung 16 ermittelt zweite Maßnahmen zur Stabilisierung des Ortsnetzes. Darauf wird später eingehender eingegangen.

Ausgehend von einem typischen Last- und Einspeiseverhalten der steuerbaren Komponenten 15 im Ortsnetz können im Wesentlichen die folgenden Szenarien unterschieden werden, die zu einer Verletzung von Grenzwerten und damit zu ungewünschten und/oder unzulässigen Betriebszuständen führen können:

In einem ersten typischen Szenario beim Betrieb des Ortsnetzes wird eine Verletzung des oberen Grenzwertes der Spannung durch dezentrale Erzeugungsanlagen verursacht, insbesondere durch Photovoltaikanlagen. Diese treten vor allem in Zeiten hoher solarer Einstrahlung und damit in den Tagesstunden auf.

In einem zweiten typischen Szenario wird eine Verletzung des unteren Grenzwertes der Spannung entweder durch einen zu niedrig gestuften Transformator am Einspeisepunkt oder durch eine zu hohe Leistungsaufnahme der (ggf. steuerbaren) elektrischen Verbraucher verursacht, die zu einem zu großen Spannungsabfall entlang der Leitung führen. Diese Effekte werden üblicherweise eher in den Abendstunden auftreten, in denen die dezentrale Einspeisung gering ausfällt und Verbraucher wie Ladeeinrichtungen für Elektrofahrzeuge aktiv sind.

In beiden typischen Szenarien kann zusätzlich ein Strom- bzw. Leistungsgrenzwert überschritten werden.

Die Betriebsweise des vorgeschlagenen Automatisierungssystems macht es sich zu Nutze, dass die oben beschriebenen Effekte mehr oder weniger entkoppelt sind und üblicherweise nicht zeitgleich auftreten. Dies motiviert den Ansatz, zur Ermittlung der Maßnahmen zur Stabilisierung des Ortsnetzes, d.h. zur Erzeugung von Ansteuersignalen für aktive Netzkomponenten (z.B. stufbare Transformatoren) und die steuerbaren Komponenten nicht mit einem mathematischen Algorithmus, z.B. auf Basis einer Lastflussrechnung, sondern unter Verwendung von Heuristiken zu bestimmen. Daraus ergibt sich der Vorteil, dass für das Regelverfahren auf eine mathematische Beschreibung des Ortsnetzes verzichtet werden kann, wodurch der Aufwand für den Einsatz von mathematischen Modellen (Datenbeschaffung, Validierung und Eingabe) vermieden werden kann. Dies erlaubt eine einfache Installation und Konfiguration der Netzsteuereinrichtung 16 und führt zu deutlich reduzierten Betriebskosten. Deswegen wird vorliegend ein heuristisches Verfahren vorgeschlagen, das in einer ersten Steuerphase zunächst Spannungsbandprobleme behebt und in einer zweiten Steuerphase, die zeitlich auf die erste Steuerphase folgt, etwaige vorhandenen Überlastungen des Transformators und/oder der Leitungen des Ortsnetzes entgegenwirkt. Dabei arbeitet das Verfahren kaskadiert: in einem ersten Messzyklus der Spannungen wird zunächst während der ersten Steuerphase ein Regelschritt für die Spannung ausgeführt und anschließend wird während der zweiten Steuerphase der Strom innerhalb des folgenden Messzyklus der Spannung auf einen nicht-kritischen Wert geregelt. Dies ist möglich, weil die Strommessung in der Ortsnetzstation als lokale Messung ohne erhöhten technischen Aufwand in sehr kurzen Zeitzyklen durchgeführt werden kann.

Im Folgenden werden die Regelheuristiken als Pseudo-Code beschrieben. Dafür sollen die folgenden Namenskonventionen gelten:

Obere Spannungsbandverletzung:

Zur Beschreibung einer oberen Spannungsbandverletzung wird für jeden Abgang k aller Abgänge K die maximal gemessene Spannung $U_{max,k}$ bestimmt.

$$U_{max,k} = max\ U_{m,k}$$

mit m = 1...$M_k$ und $M_k$ Anzahl der Spannungsmessungen (Netzanschlusspunkte) im Abgang k

Dann wird geprüft, ob und um welchen Betrag $\Delta U_{o,k}$ diese Maxima den oberen Spannungsgrenzwert $U_o$ überschreiten:

$$\Delta U_{o,k} = U_{max,k} - U_o$$

falls $U_{max,k} > U_o$, sonst $\Delta U_{o,k} = 0$

Zuletzt wird der Maximalwert $\Delta U_o$ aller oberen Spannungsbandverletzungen bestimmt:

$$\Delta U_o = max \; \Delta U_{o,k}$$

mit k = 1...K

Untere Spannungsbandverletzung:

Zur Beschreibung einer unteren Spannungsbandverletzung wird für jeden Abgang k aller Abgänge K die minimal gemessene Spannung $U_{min,k}$ bestimmt.

$$U_{min,k} = min \; U_{m,k}$$

mit m = 1...$M_k$ und $M_k$ Anzahl der Spannungsmessungen (Netzanschlusspunkte) im Abgang k

Dann wird geprüft, ob und um welchen Betrag $\Delta U_{u,k}$ diese Maxima den unteren Spannungsgrenzwert $U_u$ unterschreiten:

$$\Delta U_{u,k} = U_u - U_{min,k}$$

falls $U_{min,k} < U_u$, sonst $\Delta U_{u,k} = 0$

Zuletzt wird der Maximalwert $\Delta U_u$ aller unteren Spannungsbandverletzungen bestimmt:

$$\Delta U_u = max \; \Delta U_{u,k}$$

mit k = 1...K

Korrekturpotential:

Um zu verhindern, dass ein Absenken bzw. Anheben des Spannungsniveaus dazu führt, dass der jeweils andere Spanungsgrenzwert des Spannungsbandes verletzt wird, wird das Korrekturpotential $\Delta U_{o,korr}$ bzw. $\Delta U_{u,korr}$ für eine Veränderung der Stufenstellung eines stufbaren Transformators berechnet. Dazu werden die Messwerte im Spannungsband eingehender betrachtet: Für den oberen Spannungsgrenzwert $U_o$ ergibt es sich zu:

$$\Delta U_{o,korr} = min \; (U_{m,k} - U_u)$$

mit m = 1...$M_k$ und k = 1...K, falls $\Delta U_u = 0$, sonst $\Delta U_{o,korr} = 0$

Für den unteren Spannungsgrenzwert $U_u$ ergibt es sich zu:

$$\Delta U_{u,korr} = min \; (U_o - U_{m,k})$$

mit m = 1...$M_k$ und k = 1...K, falls $\Delta U_o = 0$, sonst $\Delta U_{u,korr} = 0$

Relatives Ansteuersignal (auch als Regelsignal bezeichnet) für steuerbare Komponenten in Form von einspeisenden Energieanlagen:

Das relative Ansteuersignal für einspeisende Energieanlagen bezieht sich auf die Nennleistung der Energieanlagen und gibt mit einem prozentualen Wert an, welche Leistung maximal eingespeist werden darf.

Relatives Ansteuersignal (auch als Regelsignal bezeichnet) für steuerbare Komponenten in Form von verbrauchenden Energieanlagen:

Das relative Ansteuersignal für verbrauchende Energieanlagen bezieht sich auf die Nennleistung der Energieanlage und gibt mit einem prozentualen Wert an, welche Leistung maximal entnommen werden darf werden darf.

Stufenstellung eines stufbaren Transformators:

Die Stufenstellung eines stufbaren Transformators wird durch ein Intervall aus diskreten Stufenwerten beschrieben:

$$[-s_u \; ... \; 0 \; ... \; +s_o],$$

wobei 0 die Neutralstellung des Stufenschalters beschreibt.

Zur Stabilisierung des Ortsnetzes bei erkannten Grenzwertverletzungen ermittelt die Netzsteuereinrichtung 16 in der ersten Steuerphase erste Maßnahmen. Die ersten Maßnahmen zielen auf eine Beeinflussung einerseits der aktiven Netzkomponenten, insbesondere der Stufenstellung eines stufbaren Transformators, und andererseits auf die Beeinflussung der elektrischen Leistungsaufnahme bzw. -abgabe der steuerbaren Komponenten 15. Entsprechend der ermittelten Maßnahmen sendet die Netzsteuereinrichtung 16 geeignete Ansteuersignale an die aktive Netzkomponente (z.B. zur Veränderung der Stellung eines Stufenschalters) und/oder entsprechende Steuerbefehle an die lokalen Mess- und Steuereinheiten 17. Diese wandeln die Steuerbefehle mit dem Protokollkonverter in für die steuerbaren Komponenten 15 verständliche Ansteuersignale um, die beispielsweise zur Erhöhung oder Verringerung der Leistungsaufnahme bzw. -abgabe durch die jeweilige steuerbare Komponente führen.

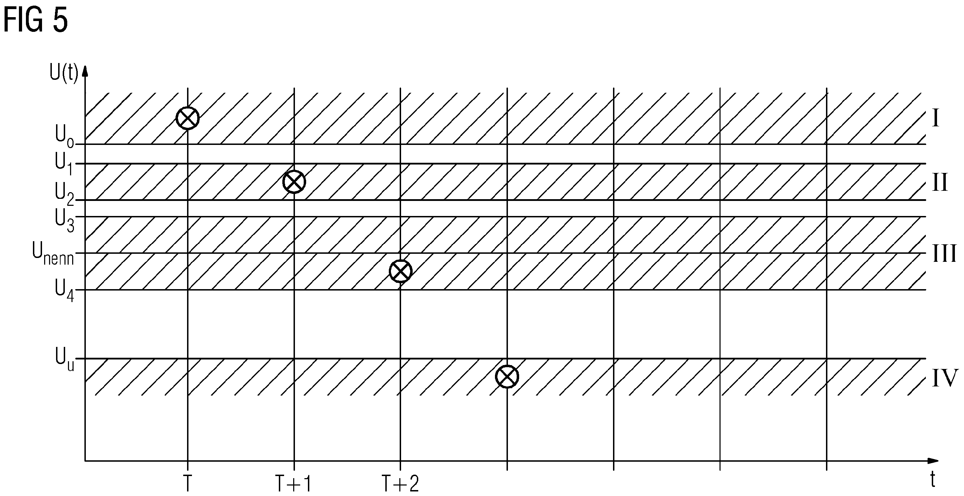

Anhand der Figur 5 wird nachfolgend die Ermittlung geeigneter Maßnahmen zur Stabilisierung des Ortsnetzes durch die Netzsteuereinrichtung während der ersten Steuerphase beschrieben:

Figur 5 zeigt zu diesem Zweck beispielhaft ein Diagramm, in dem die Lage eines einen Grenzwert verletzenden bzw. nahezu verletzenden Extremwerts der ermittelten Spannung zur Erkennung vorhandener oder drohender oberer Spannungsbandverletzungen $\Delta U_o$

bzw. unterer Spannungsbandverletzungen $\Delta U_u$ über der Zeit t zu unterschiedlichen Zeitpunkten T, T+1, T+2... aufgetragen ist. Das Diagramm weist beispielhaft vier Bereiche I-IV aus, mit denen die Lage der Extremwerte der Spannung verglichen wird. Je nach Lage der Werte werden seitens der Netzsteuereinrichtung 16 unterschiedliche erste Maßnahmen ermittelt.

Die Logik zur Ermittlung der ersten Maßnahmen wird nachfolgend für die einzelnen Bereiche I-IV mittels eines Pseudocodes beschrieben:

Bereich I:

WENN es eine obere Spannungsbandverletzung gibt ($\Delta U_o > 0$) UND es Korrekturpotential zur Absenkung der Spannung gibt

$$(\Delta U_{o,korr} > 0)$$

WENN der Stufensteller des stufbaren Transformators noch nicht auf der minimalen Position steht

DANN

Stufe den Stufensteller des Transformators soweit herunter, bis das Minimum der notwendigen Spannungsabsenkung $\Delta U_o$ und dem Korrekturpotential $\Delta U_{o,korr}$ erreicht wurde. Falls diese Absenkung nicht erreicht werden kann, wird die Stufenstellung auf den minimalen Wert gesetzt.

Bestimme die erreichte Spannungsabsenkung (z.B. durch Messung der Spannung in der Ortsnetzstation) und ziehe den Wert von allen Maxima der Spannung auf den Abgängen ab.

ENDE DANN

SCHLEIFE über alle Abgänge

WENN auf dem Abgang eine Verletzung des oberen Spannungsgrenzwertes vorliegt

DANN

WENN Regelsignal für die einspeisenden Energieanlagen nicht auf Minimalwert steht

DANN setze Regelsignal für die einspeisenden Energieanlagen auf Minimalwert

SONST erzeuge Alarm: keine Spannungsabsenkung mehr möglich

ENDE DANN

ENDE Schleife

ENDE WENN

Bereich II:

SCHLEIFE über alle Abgänge

WENN der maximale Spannungswert auf diesem Abgang in diesem Bereich II liegt UND das relative Regelsignal für die einspeisenden Energieanlagen nicht auf dem maximalen Wert steht

DANN setze des Regelsignal für die relative Leistung der einspeisenden Energieanlagen um eine Stufe herauf

ENDE WENN

ENDE SCHLEIFE

BEREICH III

WENN der maximale Spannungswert auf diesem Abgang in diesem Bereich liegt UND (das relative Regelsignal für die einspeisende Energieanlagen für alle Abgänge kleiner als der Maximalwert ist ODER das relative Regelsignal für die verbrauchenden Energieanlagen für alle Abgänge kleiner als der Maximalwert ist)

DANN

setze des Regelsignal für die relative Leistung der einspeisenden Energieanlagen um eine Stufe herauf;

setze des Regelsignal für die relative Leistung der verbrauchenden Energieanlagen um eine Stufe herauf

SONST

WENN der Stufensteller nicht in neutraler Position steht

DANN bewege ihn um eine Stufe in Richtung der neutralen Position

ENDE WENN

ENDE WENN

BEREICH IV

WENN es eine untere Spannungsbandverletzung gibt ($\Delta U_u > 0$) UND es Korrekturpotential zur Anhebung der Spannung gibt

$$(\Delta U_{u,korr} > 0)$$

WENN das relative Regelsignal für die einspeisenden Energieanlagen für alle Abgänge kleiner als der Maximalwert ist ODER das relative Regelsignal für die verbrauchenden Energieanlagen für alle Abgänge kleiner als der Maximalwert ist

DANN

setze das relative Regelsignal für alle einspeisenden Energieanlagen auf den maximalen Wert;

setze das relative Regelsignal für alle verbrauchenden Energieanlagen auf den minimalen Wert

SONST

    WENN der Stufensteller noch nicht auf der maximalen Position steht

    DANN stufe den Transformator soweit herauf, bis er das Minimum der notwendigen Spannungsabsenkung $\Delta U_o$ bzw. des Korrekturpotentials, $\Delta U_{o,korr}$ erreicht. Falls diese Anhebung nicht erreicht werden kann, wird die Stufenstellung auf den maximalen Wert gesetzt und ein Alarm abgesetzt.

    ENDE WENN

    ENDE WENN

ENDE WENN

Entsprechende Logikanweisungen können auch für andere Bereiche als die Bereiche I-IV vorgegeben werden. Die Netzsteuereinrichtung 16 ist auf diese Weise leicht in die Lage zu versetzen, anhand weniger Messwerte und ohne ein vorhandenes mathematisches Netzmodell die ersten Maßnahmen zur Stabilisierung des Ortsnetzes zu bestimmen.

Nach der auf diese Weise durchgeführten Spannungsregelung ist die erste Steuerphase abgeschlossen und die Netzsteuereinrichtung 16 startet die zweite Steuerphase. Im Anschluss an die Spannungsregelung erfolgt in der zweiten Steuerphase die Überprüfung der Strombelastungen der Leitungen und/oder der Scheinleistung des Transformators.

Zur Stabilisierung des Ortsnetzes bei erkannten Grenzwertverletzungen ermittelt die Netzsteuereinrichtung 16 in dieser zweiten Steuerphase zweite Maßnahmen. Die zweiten Maßnahmen zielen auf eine Beeinflussung der elektrischen Leistungsaufnahme bzw. -abgabe der steuerbaren Komponenten 15. Entsprechend der ermittelten zweiten Maßnahmen sendet die Netzsteuereinrichtung 16 entsprechende Steuerbefehle an die lokalen Mess- und Steuereinheiten 17. Diese wandeln die Steuerbefehle mit dem Protokollkonverter in für die steuerbaren Komponenten 15 verständliche Ansteuersignale um, die beispielsweise zur Erhöhung oder Verringerung der Leistungsaufnahme bzw. -abgabe durch die jeweilige steuerbare Komponente führen.

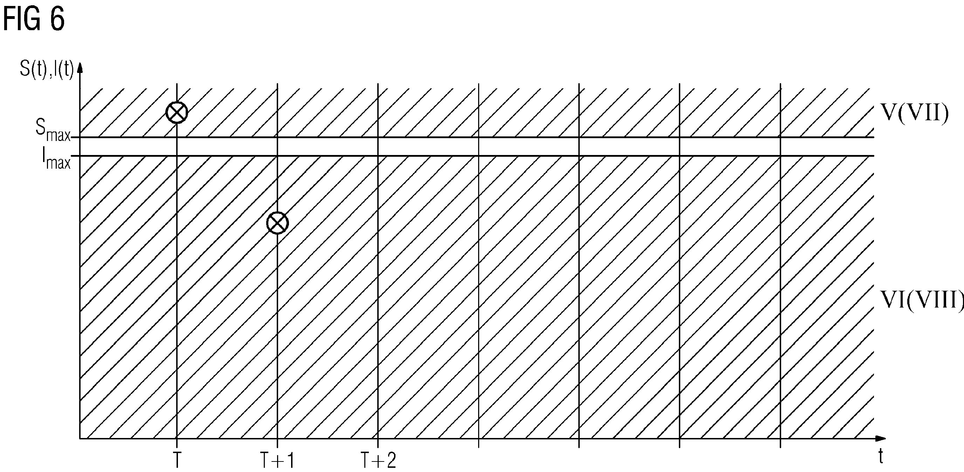

Anhand der Figur 6 wird nachfolgend die Ermittlung geeigneter zweiter Maßnahmen zur Stabilisierung des Ortsnetzes durch die Netzsteuereinrichtung während der zweiten Steuerphase beschrieben: Figur 6 zeigt zu diesem Zweck beispielhaft ein Diagramm, in dem die Lage der Strommesswerte auf einem jeweiligen Abgang sowie der Scheinleistung im Transformator zur Erkennung vorhandener oder drohender oberer Verletzungen der maximalen Strombelastung der Leitungen des Abgangs über der Zeit t zu unterschiedlichen Zeitpunkten T, T+1, T+2... aufgetragen ist. Das Diagramm weist beispielhaft vier Bereiche V-VIII aus, mit denen die Lage der Strommesswerte verglichen wird. Je nach Lage der Werte werden seitens der Netzsteuereinrichtung 16 unterschiedliche zweite Maßnahmen ermittelt.

Die Logik zur Ermittlung der zweiten Maßnahmen wird nachfolgend für die einzelnen Bereiche V-VIII erneut mittels eines Pseudocodes beschrieben: Bereiche V und VII:

    WENN die Scheinleistung des Transformators im Bereich V liegt

    DANN

        WENN das relative Regelsignal für die verbrauchenden Energieanlagen größer als der minimale Wert ist

        DANN setze das relative Regelsignal für die verbrauchenden Energieanlagen auf den minimalen Wert

        SONST erzeuge einen Alarm

        ENDE WENN

    ENDE WENN

    SCHLEIFE über alle Abgänge

        WENN der Strom des Abgangs im Bereich VII liegt

DANN

WENN das relative Regelsignal für die verbrauchenden Energieanlagen in diesem Abgang größer als der minimale Wert ist

DANN setze das relative Regelsignal für die verbrauchenden Energieanlagen auf den minimalen Wert SONST erzeuge einen Alarm

ENDE WENN

ENDE SCHLEIFE

Bereiche VI und VIII

WENN die Scheinleistung des Transformators im Bereich VI liegt

DANN

WENN das relative Regelsignal für die verbrauchenden Energieanlagen kleiner als der maximale Wert ist

DANN erhöhe das relative Regelsignal für die verbrauchenden Energieanlagen um eine Stufe

ENDE WENN

ENDE WENN

SCHLEIFE über alle Abgänge

WENN der Strom des Abgangs im Bereich VII liegt

DANN

WENN das relative Regelsignal für die verbrauchenden Energieanlagen in diesem Abgang kleiner als der maximale Wert ist

DANN erhöhe das relative Regelsignal für die verbrauchenden Energieanlagen auf diesem Abgang um eine Stufe

ENDE WENN

ENDE SCHLEIFE

Entsprechende Logikanweisungen können auch für andere Bereiche als die Bereiche V-VIII vorgegeben werden. Die Netzsteuereinrichtung 16 ist auf diese Weise leicht in die Lage zu versetzen, anhand weniger Messwerte und ohne ein vorhandenes mathematisches Netzmodell die zweiten Maßnahmen zur Stabilisierung des Ortsnetzes zu bestimmen.

Nach der auf diese Weise durchgeführten Strom- bzw. Scheinleistungsregelung ist die zweite Steuerphase abgeschlossen und die Netzsteuereinrichtung 16 startet einen erneuten Durchlauf wieder mit der ersten Steuerphase.

Wie beschrieben ermittelt die Netzsteuereinrichtung 16 in zwei aufeinanderfolgenden Steuerphasen erste und zweite Maßnahmen, die zur Stabilisierung des Ortsnetzes dienen. Die im Rahmen der oben beschrieben Heuristik ermitteln Stufenstellungen für den Transformator werden von der Netzsteuereinrichtung 16 als Ansteuersignale direkt an den Stufensteller in der Ortsnetzstation übergeben. Die relativen Regelsignale werden vom der Netzsteuereinrichtung 16 als Steuerbefehle über das Kommunikationsnetzwerk an die lokalen Mess- und Steuereinheiten 17 übertragen und von diesen über das lokale Netzwerk an die steuerbaren Komponenten 15 weitergegeben.

Falls eine lokale Mess- und Steuereinheit 17 von mehreren Netzsteuereinrichtungen 16 Steuerbefehle empfangen sollte, werden alle empfangenen Steuerbefehle von der fraglichen lokalen Mess- und Steuereinheit 17 verworfen und die betroffenen Netzsteuereinrichtungen 16 oder ein zentrales IT-System über die Fehlkonfiguration informiert. Die Netzsteuereinrichtungen 16 melden dann dieses Problem an einen Servicetechniker oder ein zentrales IT-System. Es kann vorgesehen sein, dass die Fehlkonfiguration aus der Ferne behoben werden kann.

Weiterhin kann die jeweilige lokale Mess- und Steuereinheit 17 in regelmäßigen zeitlichen Abständen prüfen, ob die angeschlossenen steuerbaren Komponenten 15 kommunikationstechnisch erreicht werden können. Falls dies nicht der Fall ist, wird ebenfalls die Netzsteuereinrichtung 16 oder ein zentrales IT-System über das Problem informiert.

Darüber hinaus kann vorgesehen sein, dass die lokale Mess- und Steuereinheit 17 zur Strommessung bezüglich der eingespeisten und/oder bezogenen elektrischen Leistung der angeschlossenen steuerbaren Komponente 15 überwacht. Im Falle von empfangenen Steuerbefehlen wird geprüft, ob die steuerbare Komponente 15 den entsprechenden Ansteuersignalen folgt. Falls dies (ggf. wiederholt) nicht erfolgt, wird ebenfalls die Netzsteuereinrichtung 16 oder ein zentrales IT-System über das Problem informiert.

Außerdem kann vorgesehen sein, dass die Netzsteuereinrichtung 16 Maßnahmen für Notprogramme für die in dem Ortsnetz befindlichen lokalen Mess- und Steuereinheiten 17 bereitstellt. Diese Notprogramme können im Falle von Kommunikationsstörungen oder beim Anlaufen der lokalen Mess- und Steuereinheiten 17 nach einem Spannungsausfall selbständig ausgeführt werden. Die Notprogramme können als Daten zur Beschreibung von einzuhaltenden Grenzwerten und/oder als Fahrpläne an die lokalen Mess- und Steuereinheiten 17 übergeben werden.

Das voranstehend vorgeschlagene Automatisierungssystem bietet unter anderem die folgenden Vorteile:

- für die Inbetriebnahme und den Betrieb der lokalen Mess- und Steuereinheiten sind keine personenbezogenen Daten erforderlich, d.h. insbesondere keine Daten, die Rückschlüsse auf das Verhalten der Endkunden erlauben, so dass der Datenschutz gewahrt ist;

- im Vergleich zu KI-basierten Lösungen werden vorliegend keine Lernzeiten benötigt, z.B. für die Zuordnung von steuerbaren Komponenten zur jeweiligen Ortsnetzstation und zum jeweiligen Abgang;

- für die Konfiguration der steuerbaren Komponenten und der zugehörigen Mess- und Steuereinheiten werden nur wenige manuelle Eingabe des Benutzers benötigt, wodurch die Fehlersicherheit steigt;

- an das bidirektionale Kommunikationsnetzwerk werden keine besonderen technischen Anforderungen gestellt, es muss lediglich ein Mindestmaß von Bandbreite bereitgestellt werden;

- es ist keine Datenmodellierung des Ortsnetzes erforderlich, die Netzsteuereinrichtung in der Ortsnetzstation muss nur bei der Installation in der Ortsnetzstation mit sehr wenigen Daten konfiguriert werden. Veränderungen im Ortsnetz (z.B. Zu- und Abbau von steuerbaren Komponenten) werden durch selbständige Anmeldung der lokalen Mess- und Steuereinheiten automatisch erkannt;

- eine ständige Überwachung des Spannungsprofiles im Ortsnetz mit realen Messungen erlaubt eine schnelle Regelung, zum Beispiel im Falle von schnellen Änderungen der Einspeiseleistungen von PV-Anlagen;

- für die Spannungsmessungen im Ortsnetz wird auf Mess- und Steuereinheiten der steuerbaren Komponenten zurückgegriffen, so dass keine zusätzlichen Messgeräte im Ortsnetz erforderlich sind;

- prinzipiell wird kein zentrales IT-System benötigt, da sich die Netzsteuereinrichtung und die lokalen Mess- und Steuereinheiten selbst verwalten;

- das Konfigurationswerkzeug für die Inbetriebnahme von lokalen Mess- und Steuereinheiten kann als Service angeboten werden. Es kann so gestaltet werden, dass es mit anonymisierten Daten arbeitet, die keine Rückschlüsse auf die Endkunden zulassen;

- durch die während der Inbetriebnahme durchgeführte Übergabe von Listen aller relevanten Ortsnetzstationen, die prinzipiell einen Netzanschlusspunkt versorgen können, ist sichergestellt, dass das System zur Betriebsführung auch Umschaltungen im Ortsnetz, d.h. Veränderungen der Netztopologie, berücksichtigen kann.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

**Patentansprüche**

1.   Verfahren zum Steuern eines elektrischen Ortsnetzes (10), wobei das Ortsnetz (10) an zumindest einem Einspeisepunkt (11a, 11b) mit einem übergeordneten Energieversorgungsnetz verbunden ist und wobei bei dem Verfahren die folgenden Schritte durchgeführt werden:

   - Erfassen von Spannungsmesswerten im Ortsnetz (10) mittels zumindest einer lokalen Mess- und Steuereinheit (17);
   - Erfassen von Strommesswerten im Bereich des Einspeisepunkts (11a, 11b);
   - Übermitteln der Spannungs- und Strommesswerte an zumindest eine Netzsteuereinrichtung (16a, 16b); und
   - Ermitteln eines elektrischen Betriebszustands des Ortsnetzes (10) mittels der zumindest einen Netzsteuereinrichtung (16a, 16b) anhand zumindest eines Teils der Spannungs- bzw. Strommesswerte;

   **dadurch gekennzeichnet, dass**

   - für den Fall, dass der Betriebszustand unzulässig und/oder ungewünscht ist, Ergreifen von ersten Maßnahmen zur Beeinflussung der Spannung im Ortsnetz (10) durch die zumindest eine Netzsteuereinrichtung (16a, 16b) während einer ersten Steuerphase und Ergreifen von zweiten Maßnahmen zur Beeinflussung des Stroms am Einspeisepunkt (11a, 11b) durch die zumindest eine Netzsteuereinrichtung (16a, 16b) während einer zweiten Steuerphase, die sich zeitlich an die erste Steuerphase anschließt.

2.   Verfahren nach Anspruch 1,
   **dadurch gekennzeichnet, dass**

- die ersten und/oder die zweiten Maßnahmen das Ansteuern von hinsichtlich ihrer elektrischen Leistungsaufnahme und/oder elektrischen Leistungsabgabe regelbaren Komponenten (15) im Ortsnetz (10) umfassen.

3. Verfahren nach Anspruch 2,
   **dadurch gekennzeichnet, dass**

   - die regelbaren Komponenten (15) zur Steuerung ihrer elektrischen Leistungsaufnahme und/oder elektrischen Leistungsabgabe jeweils mit einer lokalen Mess- und Steuereinheit (17) verbunden sind, wobei die jeweilige lokale Mess- und Steuereinheit (17) von der zumindest einen Netzsteuereinrichtung (16a, 16b) Steuerbefehle empfängt und mittels eines Protokollumsetzers in Ansteuersignale für die regelbaren Komponenten (15) umsetzt.

4. Verfahren nach einem der vorangehenden Ansprüche,
   **dadurch gekennzeichnet, dass**

   - die ersten Maßnahmen das Ansteuern der Stufenstellung eines das Ortsnetz (10) mit dem übergeordneten Energieversorgungsnetz verbindenden Transformators (12a, 12b) umfassen.

5. Verfahren nach Anspruch 4,
   **dadurch gekennzeichnet, dass**

   - die zumindest eine Netzsteuereinrichtung (16a, 16b) bei der Ermittlung der ersten Maßnahmen eine bei einer geplanten Änderung der Stufenstellung des Transformators (12a, 12b) erwartete Spannungsänderung berücksichtigt und eine Änderung der Stufenstellung nur dann durchführt, wenn die damit verbundene erwartete Spannungsänderung nicht zu einer Verschlechterung des Betriebszustands des Ortsnetzes (10) führt.

6. Verfahren nach einem der vorangehenden Ansprüche,
   **dadurch gekennzeichnet, dass**

   - das Ortsnetz (10) zumindest zwei Abgänge (13a, 13b, 13c) aufweist, die im Bereich des Einspeisepunktes (11a, 11b) aneinandergrenzen, wobei in jedem Abgang (13a, 13b, 13c) mindestens eine lokale Mess- und Steuereinheit (17) vorgesehen ist; und
   - die zumindest eine Netzsteuereinrichtung (16a, 16b) für zumindest einen Teil der lokalen Mess- und Steuereinheiten (17) die ersten und die zweiten Maßnahmen ermittelt.

7. Verfahren nach Anspruch 6,
   **dadurch gekennzeichnet, dass**

   - bezüglich jedes Abgangs (13a, 13b, 13c) an mindestens zwei voneinander entfernten Stellen mit den lokalen Mess- und Steuereinheiten (17) Spannungsmesswerte erfasst werden; und
   - die zumindest eine Netzsteuereinrichtung (16a, 16b) zur Ermittlung des Betriebszustands bezüglich jedes Abgangs jeweils den Maximalwert und/oder den Minimalwert der Spannung heranzieht.

8. Verfahren nach Anspruch 7,
   **dadurch gekennzeichnet, dass**

   - zur Ermittlung des Betriebszustands die zumindest eine Netzsteuereinrichtung (16a, 16b) die Lage des Minimalwertes bzw. Maximalwertes hinsichtlich eines erlaubten Spannungsbandes überprüft und in Abhängigkeit davon die ersten und/oder die zweiten Maßnahmen ergreift.

9. Verfahren nach einem der vorangehenden Ansprüche,
   **dadurch gekennzeichnet, dass**

   - bei mehr als einer dem Ortsnetz (10) zugeordneten Netzsteuereinrichtung (16a, 16b) die jeweilige Netzsteuereinrichtung (16a, 16b) nur die Messwerte von einer solchen lokalen Mess- und Steuereinheit (17) verarbeitet, für die sie zuständig ist, wobei eine Prüfung auf Zuständigkeit die Stellung von Schaltern im Ortsnetz (10) berücksichtigt.

10. Verfahren nach einem der vorangehenden Ansprüche,
    **dadurch gekennzeichnet, dass**

    - die zumindest eine Netzsteuereinrichtung (16a, 16b) regelmäßig überprüft, ob sie von einer jeweiligen lokalen Mess- und Steuereinheit (17) Spannungsmesswerte erhält, und eine Fehlermeldung hinsichtlich einer solchen lokalen Mess- und Steuereinheit (17) erzeugt, von der sie während einer vorgegebenen Zeitdauer keine Spannungsmesswerte erhalten hat.

11. Verfahren nach einem der vorangehenden Ansprüche,
    **dadurch gekennzeichnet, dass**

    - zur Inbetriebsetzung sich die jeweilige lokale Mess- und Steuereinheit (17) mit einer eindeutigen Kommunikationsadresse und einer Angabe über ihren Einbauort bei der zumindest einen Netzsteuereinrichtung (16a, 16b) anmeldet.

**12.** Verfahren nach Anspruch 11,
**dadurch gekennzeichnet, dass**

- bei der Inbetriebsetzung ein Protokollkonverter auf die jeweilige lokale Mess- und Steuereinheit (17) übertragen wird, der zur Umsetzung von Steuerbefehlen der Netzsteuereinrichtung (16a, 16b) in Ansteuersignale für eine regelbare Komponente (15) des Ortsnetzes (10) eingerichtet ist.

**13.** Verfahren nach einem der vorangehenden Ansprüche,
**dadurch gekennzeichnet, dass**

- für den Fall, dass eine lokale Mess- und Steuereinheit (17) in einem mehrphasigen Ortsnetz (10) eine einphasige Messung der Spannung vornimmt, mittels der zumindest einen Netzsteuereinrichtung (16a, 16b) für die von einer solchen Mess- und Steuereinheit (17) empfangenen Spannungsmesswerte korrigierte Spannungsmesswerte berechnet werden, wobei ein Unsymmetriefaktor zwischen den einzelnen Phasen des Ortsnetzes (10) berücksichtigt wird.

**14.** Netzsteuereinrichtung (16a, 16b) zum Steuern eines elektrischen Ortsnetzes (10), wobei das Ortsnetz (10) an zumindest einem Einspeisepunkt (11a, 11b) mit einem übergeordneten Energieversorgungsnetz verbunden ist, wobei

- die Netzsteuereinrichtung (16a, 16b) eine Messwerterfassungseinrichtung (21) zum Empfangen von Messwerten aufweist; und
- die Netzsteuereinrichtung (16a, 16b) eine Recheneinheit (20) zum Ermitteln eines elektrischen Betriebszustands des Ortsnetzes anhand zumindest eines Teils der Messwerte aufweist;

**dadurch gekennzeichnet, dass**

- die Recheneinheit (20) dazu eingerichtet ist, für den Fall, dass der Betriebszustand unzulässig und/oder ungewünscht ist, während einer ersten Steuerphase erste Maßnahmen zur Beeinflussung der Spannung im Ortsnetz (10) zu ergreifen und während einer zweiten Steuerphase, die sich zeitlich an die erste Steuerphase anschließt, zweite Maßnahmen zur Beeinflussung des Stroms am Einspeisepunkt (11a, 11b) zu ergreifen.

**15.** System zum Steuern eines elektrischen Ortsnetzes (10), wobei das Ortsnetz (10) an zumindest einem Einspeisepunkt (11a, 11b) mit einem übergeordneten Energieversorgungsnetz verbunden ist, wobei das System zumindest eine Netzsteuereinrichtung (16a, 16b) nach Anspruch 14 sowie zumindest eine lokale Mess- und Steuereinheit (17) aufweist, die zur Messung einer Spannung in dem elektrischen Ortsnetz (10) eingerichtet ist.

# FIG 1

EP 4 231 478 A1

FIG 2

U ↓ ↑ B

┌─────────────────┐
│      ┌─── 22 ───┐ │
│      └──────────┘ │
│           ↕        │
│  ┌──┐  ┌─────────┐│
A ←┤23├← │   20    ││
│  └──┘  └─────────┘│
│           ↑        │
│      ┌─── 21 ───┐ │
│      └──────────┘ │
└─────────────────┘
            ↑ I        16

FIG 3

B ↓ ↑ U

┌─────────────────┐
│      ┌─── 32 ───┐ │
│      └──────────┘ │
│           ↕        │
│  ┌──┐  ┌─────────┐│
C ←┤33├← │   30    ││
│  └──┘  └─────────┘│
│           ↑        │
│      ┌─── 31 ───┐ │
│      └──────────┘ │
└─────────────────┘
            ↑ U        17

EP 4 231 478 A1

FIG 4

# FIG 5

EP 4 231 478 A1

FIG 6

# EP 4 231 478 A1

Europäisches Patentamt
European Patent Office
Office européen des brevets

## EUROPÄISCHER RECHERCHENBERICHT

**Nummer der Anmeldung**

**EP 22 15 7491**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2013 012898 A1 (EF RUHR GMBH [DE]; TECH UNIVERSITÄT DORTMUND [DE]) 5. Februar 2015 (2015-02-05) | 1-8, 10-15 | INV. H02J3/06 H02J13/00 |
| A | * Absätze [0043] – [0058]; Ansprüche 1-10; Abbildungen 1-3 * | 9 | |
| | ----- | | |
| X | US 2015/168465 A1 (GADIRAJU KASI VISWANADHA RAJU [IN] ET AL) 18. Juni 2015 (2015-06-18) | 1-8, 10-15 | |
| A | * Absätze [0038] – [0053]; Abbildungen 3, 4 * | 9 | |
| | ----- | | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 26. Juli 2022 | Telega, Pawel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes Dokument

EPO FORM 1503 03.82 (P04C03)

24

## ANHANG ZUM EUROPÄISCHEN RECHERCHENBERICHT
## ÜBER DIE EUROPÄISCHE PATENTANMELDUNG NR.

EP 22 15 7491

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-07-2022

| Im Recherchenbericht angeführtes Patentdokument | Datum der Veröffentlichung | Mitglied(er) der Patentfamilie | Datum der Veröffentlichung |
|---|---|---|---|
| DE 102013012898 A1 | 05-02-2015 | DE 102013012898 A1 | 05-02-2015 |
| | | EP 3031112 A2 | 15-06-2016 |
| | | WO 2015018509 A2 | 12-02-2015 |
| US 2015168465 A1 | 18-06-2015 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3107174 B1
- EP 3336995 B1
- EP 2521237 A1